(19) 

Europäisches
Patentamt

European
Patent Office

Office européen
des brevets

(11) **EP 4 498 623 B1**

(12) **EUROPEAN PATENT SPECIFICATION**

(45) Date of publication and mention
of the grant of the patent:
**18.03.2026 Bulletin 2026/12**

(21) Application number: **22938958.0**

(22) Date of filing: **26.04.2022**

(51) International Patent Classification (IPC):
***H04L 1/18*** *(2023.01)*

(52) Cooperative Patent Classification (CPC):
**H04L 5/0012; H04L 1/189; H04L 5/0053;
H04L 5/0094; H04W 72/21;** H04W 72/231;
H04W 74/0833

(86) International application number:
**PCT/CN2022/089398**

(87) International publication number:
**WO 2023/206102 (02.11.2023 Gazette 2023/44)**

(54) **TRANSMISSION METHOD, TERMINAL DEVICE, AND NETWORK DEVICE**

ÜBERTRAGUNGSVERFAHREN, ENDGERÄTEVORRICHTUNG UND NETZWERKVORRICHTUNG

PROCÉDÉ DE TRANSMISSION, DISPOSITIF TERMINAL ET DISPOSITIF DE RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.01.2025 Bulletin 2025/05**

(73) Proprietor: **GUANGDONG OPPO MOBILE
TELECOMMUNICATIONS
CORP., LTD.
Dongguan, Guangdong 523860 (CN)**

(72) Inventor: **ZHAO, Nande
Dongguan, Guangdong 523860 (CN)**

(74) Representative: **RGTH
Patentanwälte PartGmbB
Neuer Wall 10
20354 Hamburg (DE)**

(56) References cited:
WO-A1-2021/062209        CN-A- 113 225 816
US-A1- 2021 100 004

**Description**

## TECHNICAL FIELD

The present disclosure relates to the field of communications, and more specifically, to a transmission method, a terminal device, and a network device.

## BACKGROUND

Before a radio resource control (RRC) connection is established, a terminal cannot acquire dedicated physical uplink control channel (PUCCH) resource configuration through a high-layer signaling. Therefore, a manner for pre-defining a common PUCCH resource set may be adopted to determine a cell common PUCCH resource. After the RRC connection is established, a PUCCH transmission with repetitions may be supported. However, currently, some scenarios that require the PUCCH transmission with repetitions such as before the RRC connection is established, do not support the PUCCH transmission with repetitions.

US 2021/0100004 A1 discloses a method for performing PUCCH repetition before RRC connection setup, in which the method includes the following operations. A wireless device determines a PUCCH resource for a PUCCH transmission prior to receiving a dedicated PUCCH resource configuration, determines a repetition level for the PUCCH transmission, and transmits the PUCCH transmission on at least the PUCCH resource according to the repetition level.

## SUMMARY

Transmission method for PUCCH repetition and frequency hopping, by a UE according to claims 1 and 11, and by a network device according to claims 8 and 12.

## BRIEF DESCRIPTION OF THE DRAWINGS

FIG. 1 is a schematic diagram of an application scenario according to the embodiments of the present disclosure.
FIG. 2 is a schematic flowchart of a transmission method according to an embodiment of the present disclosure.
FIG. 3 is a schematic flowchart of a transmission method according to another embodiment of the present disclosure.
FIG. 4 is a schematic block diagram of a terminal device according to an embodiment of the present disclosure.
FIG. 5 is a schematic block diagram of a terminal device according to another embodiment of the present disclosure.
FIG. 6 is a schematic block diagram of a network device according to an embodiment of the present disclosure.
FIG. 7 is a schematic block diagram of a network device according to another embodiment of the present disclosure.
FIG. 8 is a schematic diagram of an example of frequency hopping within each slot according to the embodiments of the present disclosure.
FIG. 9 is a schematic diagram of an example of frequency hopping across slots according to the embodiments of the present disclosure.
FIG. 10 is a schematic block diagram of a communication device according to the embodiments of the present disclosure.
FIG. 11 is a schematic block diagram of a chip according to the embodiments of the present disclosure.
FIG. 12 is a schematic block diagram of a communication system according to the embodiments of the present disclosure.

## DETAILED DESCRIPTION

The technical solutions in the embodiments of the present disclosure will be described below in conjunction with the drawings in the embodiments of the present disclosure.

The technical solutions of the embodiments of the present disclosure may be applied to various communication systems, such as a global system of mobile communication (GSM) system, a code division multiple access (CDMA) system, a wideband code division multiple access (WCDMA) system, general packet radio service (GPRS), a long term evolution (LTE) system, an advanced long term evolution (LTE-A) system, a new radio (NR) system, an evolution system of the NR system, a LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area networks (WLAN), a wireless fidelity (WiFi), 5th-Generation (5G) system or other communication systems.

Generally speaking, traditional communication systems support a limited number of connections and are easy to implement. However, with the development of communication technology, mobile communication systems will not only support traditional communication, but will also support, for example, device to device (D2D) communication, machine to machine (M2M) communication, machine type communication (MTC), vehicle to vehicle (V2V) communication, or vehicle to everything (V2X) communication, or the like. The embodiments of the present disclosure may also be applied to these communication systems.

In an implementation, the communication system in the embodiments of the present disclosure may be applied to a carrier aggregation (CA) scenario, may also be applied to a dual connectivity (DC) scenario, and may also be applied to a standalone (SA) networking scenario.

In an embodiment, the communication system in the embodiments of the present disclosure may be applied to an unlicensed spectrum, where the unlicensed spectrum may also be considered as a shared spectrum; or, the communication system in the embodiments of the present disclosure may also be applied to an licensed spectrum, where the licensed spectrum may also be considered as an unshared spectrum.

The embodiments of the present disclosure describe various embodiments in conjunction with a network device and a terminal device, where the terminal device may also be referred to as a user equipment (UE), an access terminal, a user unit, a user station, a mobile station, a mobile platform, a remote station, a remote terminal, a mobile device, a user terminal, a terminal, a wireless communication device, a user agent or a user apparatus, etc.

The terminal device may be a station (ST) in the WLAN, a cellular phone, a cordless phone, a session initiation protocol (SIP) phone, a wireless local loop (WLL) station, a personal digital assistant (PDA) device, a handheld device with wireless a communication function, a computing device or other processing device connected to a wireless modem, a vehicle-mounted device, a wearable device, a terminal device in a next generation communication system (such as in an NR network), or a terminal device in a future evolved public land mobile network (PLMN) network, etc.

In the embodiments of the present disclosure, the terminal device may be deployed on land, including indoors or outdoors, handheld, wearable or vehicle-mounted; may also be deployed on the water surface (e.g., on a ship, or the like); may also be deployed in the air (e.g., on an airplane, a balloon, a satellite, or the like).

In the embodiments of the present disclosure, the terminal device may be a mobile phone, a pad, a computer with a wireless transceiver function, a virtual reality (VR) terminal device, an augmented reality (AR) terminal device, a wireless terminal device in industrial control, a wireless terminal device in self driving, a wireless terminal device in remote medical, a wireless terminal device in a smart grid, a wireless terminal device in transportation safety, a wireless terminal device in a smart city, or a wireless terminal device in a smart home, etc.

By way of example and without limitation, in the embodiments of the present disclosure, the terminal device may also be a wearable device. The wearable device may also be called a wearable smart device, is a general term for the intelligent design and development of a wearable device for daily wear using wearable technology, such as glasses, gloves, watches, clothing and shoes. A wearable device is a portable device that can be worn directly on the body or integrated into the user's clothing or accessories. The wearable device is not only a hardware device, but also achieves powerful functions through software supporting as well as data interaction or cloud interaction. Generalized wearable smart devices includes full-featured, large-sized devices that may implement full or partial functionality without relying on smart phones, such as a smart watch or smart glasses, and devices that focus on a certain type of application functionality only and need to be used in conjunction with other devices (such as smart phones), such as various smart bracelets or smart jewelries for monitoring physical signs.

In the embodiments of the present disclosure, the network device may be a device used for communicating with a mobile device. The network device may be an access point (AP) in the WLAN, a base station (Base Transceiver Station, BTS) in GSM or CDMA, or may be a base station (NodeB, NB) in WCDMA, or may be an evolutional base station (eNB or eNodeB) in LTE, or a relay station or an access point, or a vehicle-mounted device, a wearable device, and a network device or a base station (gNB) in an NR network, or a network device in the PLMN network evolved in the future, or a network device in the NTN network.

By way of example and without limitation, in the embodiments of the present disclosure, the network device may have a mobile characteristic, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may also be a base station located on land, water, and other places.

In the embodiments of the present disclosure, the network device may provide a service for a cell, and the terminal device communicates with the network device through a transmission resource (such as a frequency domain resource, or a spectrum resource) used by the cell. The cell may be a cell corresponding to the network device (such as the base station), the cell may belong to a macro base station or may also be a base station corresponding to a small cell. Herein, the small cell may include: a metro cell, a micro cell, etc., these small cells have characteristics of small coverage range and low transmission power, which are applicable for providing a data transmission service with high speed.

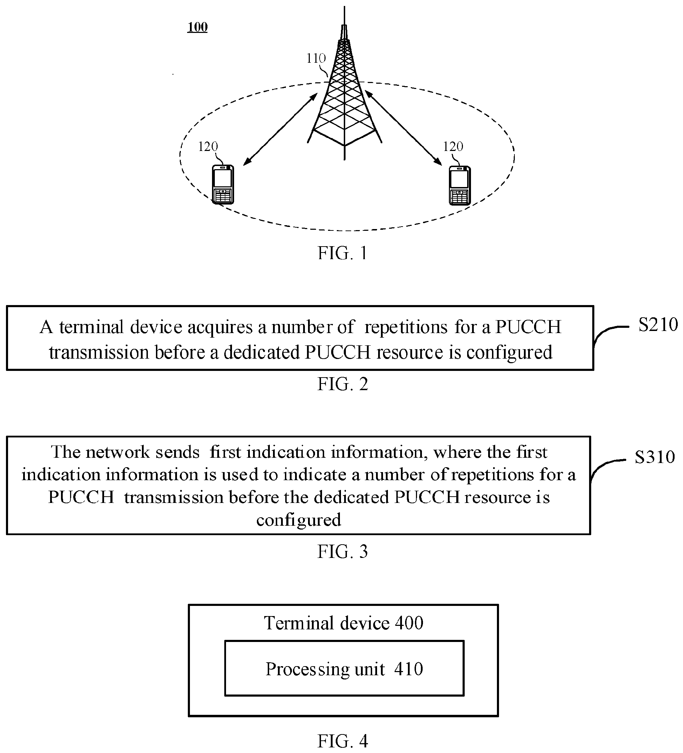

FIG. 1 exemplarily shows a communication system 100. The communication system includes one network device and two terminal devices. In an implementation, the communication system 100 may include multiple network devices 110, and the coverage area of each network device may include another number of terminal devices 120, which is not limited in the embodiments of the present disclosure.

In an implementation, the communication system 100 may further include a mobility management entity (MME), an access and mobility management function (AMF) and other network entities, which is not limited in the embodiments of the present disclosure.

The network device may also include an access network device and a core network device. That is, the wireless communication system also includes multiple core networks for communicating with the access network device. The access network device may be a evolutional base station (evolutional node B, abbreviated as eNB or e-NodeB), a macro base station, a micro base station (also referred to as a "small base station"), a pico base station, an access point (AP), a transmission point (TP), a new generation base station (new generation Node B, gNodeB) or the like, in a long-term evolution (LTE) system, a next generation (mobile communication system) (e.g., next radio, NR) system or an authorized auxiliary access long-term evolution (LAA-LTE) system.

It should be understood that a device having a communication function in a network/system in the embodiments of the present disclosure may be referred to as a communication device. Taking the communication system shown in FIG. 1 as an example, the communication device may include a network device and a terminal device with communication functions. The network device and terminal device may be specific devices in the embodiments of the present disclosure and will not be repeated herein. The communication device may also include other devices in the communication system, such as a network controller, a mobile management entity and other network entities, which are not limited to the embodiments of the present disclosure.

It should be understood that the terms "system" and "network" are often used interchangeably herein. The term "and/or" herein is merely a description of the association relationship of associated objects, and indicates that three relationships may exist. For example, A and/or B may mean: A exists alone, A and B both exist, and B exists alone. Moreover, the character "/" herein generally indicates that the associated objects before and after this character are in an "or" relationship.

It should be understood that the "indication" mentioned in the embodiments of the present disclosure may mean a direct indication or an indirect indication, or represent that there is an associated relationship. For example, A indicates B, which may mean that A directly indicates B, e.g., B may be acquired through A; A indirectly indicates B, e.g., A indicates C, and B may be acquired through C; or there is an association relationship between A and B.

In the description of the embodiments of the present disclosure, the term "corresponding" may indicate a direct or indirect correspondence between two items, or an association relationship between the two items, or a relationship of indicating and being indicated, a relationship of configuring and being configured, etc.

To facilitate understanding of the technical solutions of the embodiments of the present disclosure, the technical solutions of the present disclosure are described in detail below through specific embodiments. The following related technologies may be arbitrarily combined with the technical solutions of the embodiments of the present disclosure as optional solutions, and they all belong to the protection scope of the embodiments of the present disclosure.

1. Determination of a cell common PUCCH resource

Before the radio resource control (RRC) connection is established, a UE cannot obtain dedicated PUCCH resource configuration through a high-layer RRC signaling. Therefore, 16 groups of common PUCCH resource sets are predefined in the initial uplink bandwidth part (BWP) in the form of index values in Table 1 for transmitting hybrid automatic repeat request-acknowledgement (HARQ-ACK) information.

Table 1. A PUCCH resource set before a dedicated PUCCH resource is configured

| Index | PUCCH format | Starting symbol | Number of symbols | PRB offset $RB_{BWP}^{offset}$ | Initial CS index set |
|-------|--------------|-----------------|-------------------|--------------------------------|----------------------|
| 0 | 0 | 12 | 2 | 0 | {0, 3} |
| 1 | 0 | 12 | 2 | 0 | {0, 4, 8} |
| 2 | 0 | 12 | 2 | 3 | {0, 4, 8} |
| 3 | 1 | 10 | 4 | 0 | {0, 6} |
| 4 | 1 | 10 | 4 | 0 | {0, 3, 6, 9} |
| 5 | 1 | 10 | 4 | 2 | {0, 3, 6, 9} |
| 6 | 1 | 10 | 4 | 4 | {0, 3, 6, 9} |

(continued)

| Index | PUCCH format | Starting symbol | Number of symbols | PRB offset $RB_{BWP}^{offset}$ | Initial CS index set |
|---|---|---|---|---|---|
| 7 | 1 | 4 | 10 | 0 | {0, 6} |
| 8 | 1 | 4 | 10 | 0 | {0, 3, 6, 9} |
| 9 | 1 | 4 | 10 | 2 | {0, 3, 6, 9} |
| 10 | 1 | 4 | 10 | 4 | {0, 3, 6, 9} |
| 11 | 1 | 0 | 14 | 0 | {0, 6} |
| 12 | 1 | 0 | 14 | 0 | {0, 3, 6, 9} |
| 13 | 1 | 0 | 14 | 2 | {0, 3, 6, 9} |
| 14 | 1 | 0 | 14 | 4 | {0, 3, 6, 9} |
| 15 | 1 | 0 | 14 | $\left\lfloor N_{\mathrm{BWP}}^{\mathrm{size}} / 4 \right\rfloor$ | {0, 3, 6, 9} |

Each group of common PUCCH resource sets corresponds to one row in Table 1, that is, corresponds to a PUCCH format, a starting symbol, a number of symbols, a physical resource block (PRB) offset and a cyclic shift (CS) index set.

The base station may configure one row in selection Table 1 in the cell-level PUCCH parameters. The UE may determine a cell common PUCCH resource based on the configured index value in combination with Table 1. Before the UE is configured with a dedicated PUCCH resource (also referred to as a dedicated PUCCH resource), such as in the initial access phase, the configured cell common PUCCH resource is used to send HARQ-ACK information.

2. PUCCH transmission with repetitions process

After the RRC connection is established, the UE may be indicated to use one PUCCH resource to send PUCCH in $N_{PUCCH}^{repeat}$ slots, where, if the PUCCH resource is indicated by downlink control information (DCI) format and includes a high-layer parameter *PUCCH-nrofSlots,* $N_{PUCCH}^{repeat}$ is provided by *PUCCH-nrofSlots.* Otherwise, $N_{PUCCH}^{repeat}$ is provided by the high-layer parameter *nrofSlots.*

For $N_{PUCCH}^{repeat}$ >1, the UE repeats a PUCCH transmission of uplink control information (UCI) in $N_{PUCCH}^{repeat}$ slots. The PUCCH transmissions in $N_{PUCCH}^{repeat}$ slots have a same number of consecutive symbols, which may be provided by the high-layer parameter *nrofSymbols.* The PUCCH transmissions in $N_{PUCCH}^{repeat}$ slots have a same starting symbol, which may be provided by the high-layer parameter *startingSymbolIndex.* The UE may be configured as whether to perform frequency hopping for PUCCH transmission between different slots by the high-layer parameter *interslotFrequencyHopping.*

If the UE is configured to perform frequency hopping for PUCCH transmission between different slots. For example, the UE may perform frequency hopping in each slot. For another example, the UE may send a PUCCH starting from a first PRB provided by a high-layer parameter *startingPRB* in an even-numbered slot, and may send a PUCCH starting from a second PRB provided by the high-layer parameter *secondHopPRB* in an odd-numbered slot. A slot indicated to the UE for a first PUCCH transmission is recorded as 0, and each slot of $N_{PUCCH}^{repeat}$ slot is counted, regardless of whether the UE sends a PUCCH in this slot. As another example, the UE may not expect the PUCCH transmission configured in a slot to perform frequency hopping.

If the UE is not configured to perform frequency hopping for PUCCH transmission between different slots, and if the UE is configured to perform frequency hopping for PUCCH transmission within each slot, a frequency hopping pattern between a first PRB and a second PRB in each slot is the same.

For a PUCCH transmission in a slot, if the UE finds that the number of symbols available for PUCCH transmission is less than the number of symbols configured by the high-layer parameter *nrofSymbols,* the UE does not send a PUCCH in this slot.

The related technologies do not support a PUCCH transmission with repetitions before RRC connection is established. However, in communication scenarios with limited coverage performance, such as an NTN system, a single PUCCH transmission may not meet the coverage requirements. Especially in the initial access phase, if a PUCCH carrying HARQ-ACK information cannot be successfully received, the UE will be unable to access the network, which will have a significant impact on system performance. Therefore, it is necessary to enhance PUCCH transmissions before the RRC connection is established, for example, introducing a mechanism of a PUCCH transmission with repetitions before the RRC connection is established, so as to improve its coverage performance.

The embodiments of the present disclosure provide a transmission method, and the method includes: acquiring, by a terminal device, a number of repetitions for a PUCCH transmission before a dedicated PUCCH resource is configured.

In some embodiments, the method further includes:
receiving, by the terminal device, first indication information, where the first indication information is used to indicate the number of repetitions for the PUCCH transmission.

In some embodiments, the first indication information includes a first common PUCCH resource set index value, and where acquiring, by the terminal device, the number of repetitions for the PUCCH transmission before the dedicated PUCCH resource is configured includes:
determining, by the terminal device, a number of repetitions for a PUCCH transmission corresponding to the first common PUCCH resource set index value based on the first common PUCCH resource set index value.

In some embodiments, the first common PUCCH resource set index value is in a first range, and a second common PUCCH resource set index value is in a second range.

In some embodiments, in a case where the first range is different from the second range, the first common PUCCH resource set index value is greater than the second common PUCCH resource set index value.

In some embodiments, the number of repetitions for the PUCCH transmission corresponding to the first common PUCCH resource set index value is greater than 1.

In some embodiments, in a case where the first range is the same as the second range, the number of repetitions for the PUCCH transmission corresponding to the first common PUCCH resource set index value is greater than or equal to 1.

In some embodiments, a second common PUCCH resource set index value does not have a corresponding number of repetitions for a PUCCH transmission or a number of repetitions for a PUCCH transmission corresponding to a second common PUCCH resource set index value is equal to 1.

In some embodiments, the first indication information is carried by system information.

In some embodiments, a common PUCCH configuration parameter in the system information carries the first indication information.

In some embodiments, the first indication information is carried by downlink control information (DCI).

In some embodiments, the first indication information carried by the DCI is a PUCCH resource indication field.

In some embodiments, a value of the PUCCH resource indication field has a corresponding number of repetitions for a PUCCH transmission.

In some embodiments, a value of the PUCCH resource indication field is used to determine a common PUCCH resource index value, and the common PUCCH resource index value has a corresponding number of repetitions for a PUCCH transmission.

In some embodiments, the common PUCCH resource index value is calculated based on the value of the PUCCH resource indication field, a number of control channel elements (CCE) in a control resource set where the DCI is located, and an index value of a first CCE occupied by the DCI.

In some embodiments, the first indication information is carried by a DCI for scheduling a temporary cell-radio network temporary identifier (TC-RNTI) scrambled cyclic redundancy check (CRC) and/or a random access response (RAR) uplink grant of a message Msg3 physical uplink shared channel (PUSCH) of a random access process.

In some embodiments, the first indication information carried by the DCI for scheduling the RAR uplink grant of the Msg3 PUSCH and/or the TC-RNTI scrambled CRC is a number of repetitions for a Msg3 transmission.

In some embodiments, the number of repetitions for the PUCCH transmission is calculated based on a number of repetitions for a Msg3 transmission.

In some embodiments, the number of repetitions for the PUCCH transmission is equal to the number of repetitions for the Msg3 transmission divided by a set value and rounded up.

In some embodiments, the method further includes:
in a case where a transmission with repetitions is needed, performing, by the terminal device, a PUCCH transmission with repetitions for according to the number of repetitions for the PUCCH transmission.

In some embodiments, the method further includes:
receiving, by the terminal device, second indication information, where the second indication information is used to indicate a frequency hopping mode of transmitting a PUCCH with repetitions by the terminal device.

In some embodiments, the frequency hopping mode includes at least one of:

frequency hopping within each slot; or
frequency hopping across slots.

In some embodiments, the frequency hopping within each slot includes:

one slot includes a plurality of frequency hopping units, where different frequency hopping units in a same slot correspond to different frequency domain resources, one PUCCH is divided into a plurality of parts, and each part of the plurality of parts is transmitted using one frequency hopping unit in the slot.

In some embodiments, the frequency hopping across slots includes:

one slot includes one frequency hopping unit, where frequency hopping units of adjacent slots correspond to different frequency domain resources, and one PUCCH is transmitted using one frequency hopping unit in one slot.

The embodiments of the present disclosure provide a transmission method, and the method includes: sending, by a network device, first indication information, where the first indication information is used to indicate a number of repetitions for a PUCCH transmission before a dedicated PUCCH resource is configured.

In some embodiments, the first indication information includes a first common PUCCH resource set index value, and the first common PUCCH resource set index value has a corresponding number of repetitions for a PUCCH transmission.

In some embodiments, the first common PUCCH resource set index value is in a first range, and a second common PUCCH resource set index value is in a second range.

In some embodiments, in a case where the first range is different from the second range, the first common PUCCH resource set index value is greater than the second common PUCCH resource set index value.

In some embodiments, the number of repetitions for the PUCCH transmission corresponding to the first common PUCCH resource set index value is greater than 1.

In some embodiments, in a case where the first range is the same as the second range, the number of repetitions for the PUCCH transmission corresponding to the first common PUCCH resource set index value is greater than or equal to 1.

In some embodiments, a second common PUCCH resource set index value does not have a corresponding number of repetitions for a PUCCH transmission or a number of repetitions for a PUCCH transmission corresponding to a second common PUCCH resource set index value is equal to 1.

In some embodiments, the first indication information is carried by system information.

In some embodiments, a common PUCCH configuration parameter in the system information carries the first indication information.

In some embodiments, the first indication information is carried by downlink control information (DCI).

In some embodiments, the first indication information carried by the DCI is a PUCCH resource indication field.

In some embodiments, a value of the PUCCH resource indication field has a corresponding number of repetitions for a PUCCH transmission.

In some embodiments, a value of the PUCCH resource indication field is used to determine a common PUCCH resource index value, and the common PUCCH resource index value has a corresponding number of repetitions for a PUCCH transmission.

In some embodiments, the common PUCCH resource index value is calculated based on the value of the PUCCH resource indication field, a number of CCEs in a control resource set where the DCI is located, and an index value of a first CCE occupied by the DCI.

In some embodiments, the first indication information is carried by a DCI for scheduling a TC-RNTI scrambled CRC and/or a RAR uplink grant of a message Msg3 PUSCH of a random access process.

In some embodiments, the first indication information carried by the DCI for scheduling the RAR uplink grant of the Msg3 PUSCH and/or the TC-RNTI scrambled CRC is a number of repetitions for a Msg3 transmission.

In some embodiments, the number of repetitions for the PUCCH transmission is calculated based on a number of repetitions for an Msg3 transmission.

In some embodiments, the number of repetitions for the PUCCH transmission is equal to the number of repetitions for the Msg3 transmission divided by a set value and rounded up.

In some embodiments, the method further includes:

sending, by the network device, second indication information, where the second indication information is used to indicate a frequency hopping mode of transmitting a PUCCH with repetitions by the terminal device.

In some embodiments, the frequency hopping mode includes at least one of:

frequency hopping within each slot; or
frequency hopping across slots.

In some embodiments, the frequency hopping within each slot includes:

one slot includes a plurality of frequency hopping units, where different frequency hopping units in a same slot correspond to different frequency domain resources, one PUCCH is divided into a plurality of parts, and each part of the plurality of parts is transmitted using one frequency hopping unit in the slot.

In some embodiments, the frequency hopping across slots includes:

one slot includes one frequency hopping unit, where frequency hopping units of adjacent slots correspond to different frequency domain resources, and one PUCCH is transmitted using one frequency hopping unit in one slot.

FIG. 2 is a schematic flowchart of a transmission method 200 according to an embodiment of the present disclosure. The method may optionally be applied to the system shown in FIG. 1, but is not limited thereto. The method includes at least part of the following.

S210, a terminal device acquires a number of repetitions for a PUCCH transmission before a dedicated PUCCH resource is configured.

In the embodiments of the present disclosure, being before a dedicated PUCCH resource is configured may include situations, for example, being before the RRC connection is established, the initial access process/phase, or the like. In some scenarios, such as the NTN system or other systems that require PUCCH retransmissions before a dedicated PUCCH resource is configured, the terminal device may acquire the number of repetitions for the PUCCH transmission before the dedicated PUCCH resource is configured. In the embodiments of the present disclosure, the number of repetitions for the PUCCH transmission before the dedicated PUCCH resource is configured may also be referred to as the number of repetitions for the PUCCH transmission before the RRC connection is established, the number of repetitions for the PUCCH transmission before the RRC connection, the number of repetitions for the PUCCH transmission in the initial access process/phase, etc.

For example, the terminal device may receive indication information from a network device, and acquire the number of repetitions for the PUCCH transmission before the dedicated PUCCH resource is configured based on the indication information. For another example, the terminal device may acquire information related to the number of repetitions for the PUCCH transmission before the dedicated PUCCH resource is configured, and calculate the number of repetitions for the PUCCH transmission before the dedicated PUCCH resource is configured based on the obtained information.

In the embodiments of the present disclosure, after acquiring the number of repetitions for the PUCCH transmission before the dedicated PUCCH resource is configured, the terminal device may transmit a PUCCH with repetitions according to the number of repetitions for the PUCCH transmission, before the dedicated PUCCH resource is configured.

In an implementation, the method further includes: receiving, by the terminal device, first indication information, where the first indication information is used to indicate the number of repetitions for the PUCCH transmission.

In an implementation, the first indication information includes a first common PUCCH resource set index value, where acquiring, by the terminal device, the number of repetitions for the PUCCH transmission before the dedicated PUCCH resource is configured includes:

determining, by the terminal device, a number of repetitions for a PUCCH transmission corresponding to the first common PUCCH resource set index value based on the first common PUCCH resource set index value.

In an implementation, the first common PUCCH resource set index value has the corresponding number of repetitions for the PUCCH transmission.

In an implementation, the first common PUCCH resource set index value is in a first range, and a second common PUCCH resource set index value is in a second range.

In an implementation, the second common PUCCH resource set index value does not have a corresponding number of repetitions for a PUCCH transmission or a number of repetitions for a PUCCH transmission corresponding to the second common PUCCH resource set index value is equal to 1.

For example, referring to Table 1, the second range where the second common PUCCH resource set index value is located may be 0 to 15. The second range may also be set in other ways, which are not specifically limited in the embodiments of the present disclosure.

In an implementation, if the first range is the same as the second range, the number of repetitions for the PUCCH transmission corresponding to the first common PUCCH resource set index value is greater than or equal to 1.

In the embodiments of the present disclosure, a correspondence between a PUCCH resource set index value and the number of repetitions for the PUCCH transmission before the dedicated PUCCH resource is configured may be pre-configured in a table of common PUCCH resource sets. For example, the table may include multiple columns, where one column represents a common PUCCH resource set index, and one column represents the number of repetitions for the PUCCH transmission before the dedicated PUCCH resource is configured. After receiving the first indication information from the network device such as a base station, the terminal device may search the table to obtain the number of repetitions for the PUCCH transmission before the dedicated PUCCH resource is configured according to the first common PUCCH resource set index value in the first indication information.

In an implementation, the first range where the first common PUCCH resource set index value is located may be the same as the second range described above. For example, the first range is 0 to 15. The second common PUCCH resource set may be a traditional common PUCCH resource set, the first common PUCCH resource set index value has the same range as the second common PUCCH resource set index value, and the signaling overhead for configuring the first common PUCCH resource set index value may be the same as the traditional signaling overhead for configuring the common PUCCH resource set index value. For example, a number of bits required for the first indication information may not be increased.

For example, in the table of the common PUCCH resource set, a new column may be added to indicate the number of repetitions for the PUCCH transmission before the dedicated PUCCH resource is configured. The number of repetitions for the PUCCH transmission before the dedicated PUCCH resource is configured may be greater than or equal to 1. In this way, if receiving the first common PUCCH resource set index value, the terminal device may search for the number of repetitions for the PUCCH transmission in the newly added column corresponding to the first common PUCCH resource set index value. For example, if the first common PUCCH resource set index value received by the terminal device is 8, the number of repetitions for the PUCCH transmission in the newly added column corresponding to the index value 8 may be searched for, for example 4, which indicates that the PUCCH transmission with repetitions may be performed 4 times before the dedicated PUCCH resource is configured.

In an implementation, if the first range is different from the second range, the first common PUCCH resource set index value is greater than the second common PUCCH resource set index value.

In an implementation, the first common PUCCH resource set index value and the second common PUCCH resource set index value correspond to different numbers of repetitions for the PUCCH transmission. The second common PUCCH resource set may be a traditional common PUCCH resource set, for example, an index value range of the second common PUCCH resource set is 0 to 15. The first common PUCCH resource set index value and the second common PUCCH resource set index value have different ranges. For example, the first common PUCCH resource set index value range is from 16 to 18. This is conducive to compatibility with traditional common PUCCH resource configuration manners. The terminal device may determine whether it is necessary to perform a transmission with repetitions according to the range of index values configured by system information of the network device. For example, when the index value configured by the system information is in the range of 0 to 15, the transmission with repetitions does not need to be performed, but when the index value configured by the system information is in the range of 16 to 18, the transmission with repetitions needs to be performed.

In an implementation, the number of repetitions for the PUCCH transmission corresponding to the first common PUCCH resource set index value is greater than 1.

In an implementation, a first range where the first common PUCCH resource set index value is located may be greater than 15, which is different from a second range of 0 to 15 mentioned above. For example, in the table of common PUCCH resource sets, a new row and column may be added in addition to the second common PUCCH resource set, herein the newly added row represents the first common PUCCH resource set. Parameters of the first common PUCCH resource set may be similar to parameters of the second common PUCCH resource set. The newly added column is used to indicate the number of repetitions for the PUCCH transmission. The second common PUCCH resource set index value is in the second range, and the value of the newly added column corresponding to the index value may be empty or 1, which indicates that the number of repetitions for the PUCCH transmission is 1, that is, no PUCCH transmission with repetitions is performed. The first common PUCCH resource set index value is in the first range, and the value of the newly added column corresponding to the index value may be greater than 1, thereby representing the number of repetitions for the PUCCH transmission before the dedicated PUCCH resource is configured. For example, if the first common PUCCH resource set index value received by the terminal device is 16, the number of repetitions for the PUCCH transmission in the newly added column corresponding to the row where the index value 16 is located may be found, for example, 2, which indicates that the PUCCH transmission with repetitions may be performed twice before the dedicated PUCCH resource is configured.

In an implementation, the first indication information is carried by the system information. For example, the terminal device may receive the system information (such as SIB1 in the system information) from the network device such as a base station, and the SIB1 may carry the first indication information to indicate the number of times that the PDCCH transmission with repetitions may be performed by the terminal device before the dedicated PUCCH resource is configured.

In an implementation, a common PUCCH configuration parameter of the SIB1 in the system information carries the first indication information. For example, the common PUCCH configuration parameter of the SIB1 in the system information may introduce a new system parameter specifically used to indicate the number of repetitions for the PUCCH transmission before the dedicated PUCCH resource is configured. For example, the common PUCCH configuration parameter carried in the SIB1 transmitted by the base station introduces *NTN-nrofSlots={2,4,8}*. The value of *NTN-nrofSlots* may represent the number of repetitions for the PUCCH transmission. For example, the value of the common PUCCH configuration parameter is 2, which represents that the number of repetitions for the PUCCH transmission is 2. In this way, the base station may flexibly configure the number of repetitions for the PUCCH transmission and a common PUCCH resource.

In an implementation, the first indication information is carried by DCI. For example, the DCI may directly carry the number of repetitions for the PUCCH transmission, or may carry information related to the number of repetitions for the PUCCH transmission, and the number of repetitions for the PUCCH transmission may be acquired based on the information. In this way, the network device (such as the base station) may configure the number of repetitions for the PUCCH transmission for each UE individually.

In an implementation, the first indication information carried by the DCI is a PUCCH resource indication field. For example, Table 1 predefines 16 groups of common PUCCH resource sets in the form of index values, and each group of PUCCH resource sets further includes 16 PUCCH resources. The 3-bit PUCCH resource indication field in the DCI may be used to indicate not only the PUCCH resource but also the number of repetitions for the PUCCH transmission. The method for indicating the number of repetitions for the PUCCH transmission may be explicit or implicit.

In an implementation, a value of the PUCCH resource indication field has a corresponding number of repetitions for a PUCCH transmission. In the embodiments of the present disclosure, a mapping relationship between the value of the PUCCH resource indication field and the number of repetitions for the PUCCH transmission may be preset. For example, when the value of the PUCCH resource indication field is "010", the corresponding number of repetitions for the PUCCH transmission is 3; when the value of the PUCCH resource indication field is "011", the corresponding number of repetitions for the PUCCH transmission is 4. After receiving the DCI carrying the PUCCH resource indication field, the terminal device may search for the corresponding number of repetitions for the PUCCH transmission according to the value of the PUCCH resource indication field.

In an implementation, the value of the PUCCH resource indication field is used to determine a common PUCCH resource index value, and the common PUCCH resource index value has a corresponding number of repetitions for the PUCCH transmission. In the embodiments of the present disclosure, after receiving the DCI carrying the PUCCH resource indication field, the terminal device may calculate the common PUCCH resource index value according to the value of the PUCCH resource indication field. After the common PUCCH resource index value is calculated, the corresponding number of repetitions for the PUCCH transmission may be searched according to the common PUCCH resource index value.

In an implementation, the common PUCCH resource index value is calculated based on the value of the PUCCH resource indication field, the number of control channel elements (CCEs) in the control resource set where the DCI is located, and an index value of a first CCE occupied by the DCI. For example, the value of the PUCCH resource indication field, the number of CCEs in the control resource set where the DCI is located, and the index value of the first CCE occupied by the DCI may be used to construct a calculation formula for the PUCCH resource index, and the common PUCCH resource index value may be calculated based on the calculation formula. For example, the calculation formula may be:

$$r_{\text{PUCCH}} = \left\lfloor \frac{2 \cdot n_{\text{CCE},0}}{N_{\text{CCE}}} \right\rfloor + 2 \cdot \Delta_{\text{PRI}}$$

Herein, $r_{\text{PUCCH}}$ is the PUCCH resource index value, $N_{\text{CCE}}$ is the number of CCEs in the control resource set where the DCI is located, $n_{\text{CCE},0}$ is the index value of the first CCE occupied by the DCI, and $\Delta_{\text{PRI}}$ is the value of the PUCCH resource indication field in the DCI, for example, indicated by 3 bits.

In an implementation, the first indication information is carried by DCI for scheduling a temporary cell-radio network temporary identifier (TC-RNTI) scrambled cyclic redundancy check (CRC) and/or a random access response (RAR) uplink grant of a message Msg3 physical uplink shared channel (PUSCH) of random access process. In this way, the UE may acquire an indication of the number of repetitions for the PUCCH transmission before the dedicated PUCCH resource is configured based on an Msg3 repetition transmission mechanism.

In an implementation, the first indication information carried by the DCI for scheduling the RAR uplink grant of Msg3 PUSCH and/or the TC-RNTI scrambled CRC is the number of repetitions for the Msg3 transmission.

In an implementation, the number of repetitions for the PUCCH transmission is calculated based on the number of repetitions for the Msg3 transmission.

In an implementation, the number of repetitions for the PUCCH transmission is equal to the number of repetitions for the Msg3 transmission divided by a set value and rounded up.

In the embodiments of the present disclosure, the terminal device receives the number of repetitions for the Msg3 transmission from the base station. Exemplarily, the terminal device may acquire the number of repetitions for the Msg3 transmission by the DCI for scheduling the RAR uplink grant of Msg3 PUSCH and/or the TC-RNTI scrambled CRC. The terminal device may calculate the number of repetitions for the PUCCH transmission before the dedicated PUCCH resource is configured based on the number of repetitions for the Msg3 transmission. For example, the terminal device may divide the number of repetitions for the Msg3 transmission by a set value and then round up to obtain the number of repetitions for the PUCCH transmission before the dedicated PUCCH resource is configured.

In an implementation, the method further includes: when the terminal device needs to perform a transmission with repetitions, transmitting a PUCCH with repetitions according to the number of repetitions for the PUCCH transmission. For example, before the dedicated PUCCH resource is configured, the terminal device may need to perform a PUCCH transmission with repetitions due to a reason such as cell coverage performance. In this case, the terminal device may transmit the PUCCH with repetitions before the dedicated PUCCH resource is configured according to the number of repetitions for the PUCCH transmission before the dedicated PUCCH resource is configured as determined by any of the above manners.

In an implementation, if the terminal device acquires that the number of repetitions for the PUCCH transmission before the dedicated PUCCH resource is configured is N, then before the dedicated PUCCH resource is configured, the terminal device is instructed to perform a PUCCH transmission with repetitions on N slots.

In an implementation, if the terminal device is indicated to perform the PUCCH transmission with repetitions on the N slots before a dedicated PUCCH resource is configured, the method in which the terminal device performs the transmission with repetitions may include: repeating, by the terminal device, the PUCCH transmission on the N slots.

In an implementation, the PUCCH transmissions on the N slots have a same number of consecutive symbols, the number of consecutive symbols is determined by the number of symbols corresponding to the common PUCCH resource set index value indicated by the network device, such as the base station.

In an implementation, the PUCCH transmissions on the N slots have a same starting symbol, and the starting symbol is determined by a starting symbol index corresponding to the common PUCCH resource set index value indicated by the network device, such as the base station.

In an implementation, if the terminal device performs frequency hopping across slots during PUCCH transmission with repetitions, the terminal device performs frequency hopping in each of the N slots.

For example, the terminal device sends the PUCCH starting from the first PRB in an even-numbered slot among the N slots, and sends the PUCCH starting from the second PRB in an odd-numbered slot among the N slots. The slot indicated by the network device to the terminal device for the first PUCCH transmission may be recorded as 0, and each of the N slots is counted, regardless of whether the terminal device sends PUCCH in this slot. The indexes of the first PRB and the second PRB may be determined according to a common PUCCH resource PRB index determination formula in the related art.

If the terminal device performs frequency hopping within each slot during PUCCH transmission with repetitions, the terminal device has the same frequency hopping pattern between the first PRB and the second PRB in each of the N slots. The indexes of the first PRB and the second PRB are determined according to a common PUCCH resource PRB index determination formula in the related art.

In an implementation, for the PUCCH transmission in a slot, if the terminal device finds that the number of symbols available for the PUCCH transmission is less than the number of symbols corresponding to the common PUCCH resource set index value indicated by the network device, such as the base station, the terminal device does not send the PUCCH in the slot.

In an implementation, if the terminal device wants to send the PUCCH on the N slots, but does not send the PUCCH in one of the slots due to a collision with another PUCCH transmission, the terminal device counts this slot into the N slots.

In an implementation, the method further includes: receiving, by the terminal device, second indication information, where the second indication information is used to indicate a frequency hopping mode of transmitting a PUCCH with repetitions by the terminal device.

In the embodiments of the present disclosure, the terminal device may perform the PUCCH transmission with repetitions using a frequency hopping mode. The specific frequency hopping mode may be indicated to the terminal device by the network device such as a base station. For example, the terminal device receives system information from the network device, where the system information includes a candidate frequency hopping mode of the PUCCH transmission with repetitions. For example, the candidate frequency hopping mode of the PUCCH transmission with repetitions is carried by SIB1. Then, the network device may flexibly select a frequency hopping mode to configure for the terminal device, thereby obtaining the optimal frequency hopping performance.

In an implementation, the frequency hopping mode includes at least one of :

frequency hopping within each slot; or
frequency hopping across slots.

In an implementation, the frequency hopping within each slot includes: one slot includes multiple frequency hopping units, where different frequency hopping units in the same slot correspond to different frequency domain resources, one PUCCH is divided into multiple parts, and each part of the multiple parts is transmitted using a frequency hopping unit in the slot.

In the embodiments of the present disclosure, one PUCCH may correspond to a PUCCH transmission in one slot.

If the terminal device performs the PUCCH transmission with repetitions by the frequency hopping within each slot, one PUCCH may be divided into multiple parts, and different parts may be transmitted using different frequency hopping units within one slot. For example, if each slot includes a first frequency hopping unit and a second frequency hopping unit, the PUCCH is divided into part A and part B. Then, the part A may be transmitted in the first frequency hopping unit of a slot 0, and the part B may be transmitted in the second frequency hopping unit of a slot 0. Further, if the number of repetitions for transmission is 3, the part A may be transmitted in a first frequency hopping unit of a slot 1 and the part B may be transmitted in a second frequency hopping unit a slot 1; the part A may be transmitted in a first frequency hopping unit of a slot 2 and the part B may be transmitted in a second frequency hopping unit a slot 2.

In an implementation, the frequency hopping across slots includes: one slot includes one frequency hopping unit, where the frequency hopping units of adjacent slots correspond to different frequency domain resources, and one PUCCH is transmitted using one frequency hopping unit of one slot.

In the embodiments of the present disclosure, if the terminal device performs the PUCCH transmission with repetitions by frequency hopping across slots, the frequency hopping units of adjacent slots correspond to different frequency domain resources. For example, a first frequency hopping unit of a slot 0 corresponds to a frequency domain resource F1, a second frequency hopping unit of a slot 1 corresponds to a frequency domain resource F2, a first frequency hopping unit of a slot 2 corresponds to the frequency domain resource F1, and a second frequency hopping unit of a slot 3 corresponds to the frequency domain resource F2. If a PUCCH needs to be transmitted four times, the PUCCH may be transmitted in the first hopping unit of the slot 0, the second hopping unit of the slot 1, the first hopping unit of the slot 2, and the second hopping unit of the slot 3.

In the embodiments of the present disclosure, the terminal device may acquire the number of repetitions for the PUCCH transmission before the dedicated PUCCH resource is configured, e.g., before an RRC connection is established, initial access process/phase, or the like, and then the terminal device may perform the PUCCH transmission with repetitions before the dedicated PUCCH resource is configured, thereby improving the coverage performance of the communication system.

FIG. 3 is a schematic flowchart of a transmission method 300 according to an embodiment of the present disclosure. The method may optionally be applied to the system shown in FIG. 1, but is not limited thereto. The method includes at least part of the following.

S310, the network device transmits the first indication information, where the first indication information is used to indicate the number of repetitions for the PUCCH transmission before the dedicated PUCCH resource is configured.

In an implementation, the first indication information includes the first common PUCCH resource set index value, and the first common PUCCH resource set index value has a corresponding number of repetitions for a PUCCH transmission.

In an implementation, the first common PUCCH resource set index value is in the first range, and a second common PUCCH resource set index value is in the second range.

In an implementation, if the first range is different from the second range, the first common PUCCH resource set index value is greater than the second common PUCCH resource set index value.

In an implementation, the number of repetitions for the PUCCH transmission corresponding to the first common PUCCH resource set index value is greater than 1.

In an implementation, if the first range is the same as the second range, the number of repetitions for the PUCCH transmission corresponding to the first common PUCCH resource set index value is greater than or equal to 1.

In an implementation, the second common PUCCH resource set index value does not have a corresponding number of repetitions for a PUCCH transmission or a number of repetitions for a PUCCH transmission corresponding to the second common PUCCH resource set index value is equal to 1.

In an implementation, the first indication information is carried by the system information.

In an implementation, the common PUCCH configuration parameter in the system information carries the first indication information.

In an implementation, the first indication information is carried by the downlink control information (DCI).

In an implementation, the first indication information carried by the DCI is the PUCCH resource indication field.

In an implementation, the value of the PUCCH resource indication field has the corresponding number of repetitions for the PUCCH transmission.

In an implementation, the value of the PUCCH resource indication field is used to determine the common PUCCH resource index value, and the common PUCCH resource index value has the corresponding number of repetitions for the PUCCH transmission.

In an implementation, the common PUCCH resource index value is calculated based on the value of the PUCCH resource indication field, the number of CCEs in the control resource set where the DCI is located, and the index value of the first CCE occupied by the DCI.

In an implementation, the first indication information is carried by the DCI for scheduling the TC-RNTI scrambled CRC the RAR and/or uplink grant of Msg3 PUSCH of the random access process.

In an implementation, the first indication information carried by the DCI for scheduling the RAR uplink grant of Msg3 PUSCH and/or the TC-RNTI scrambled CRC is the number of repetitions for the Msg3 transmission.

In an implementation, the number of repetitions for the PUCCH transmission is calculated based on the number of repetitions for the Msg3 transmission.

In an implementation, the number of repetitions for the PUCCH transmission is equal to the number of repetitions for the Msg3 transmission divided by the set value and rounded up.

In an implementation, the method further includes:

sending, by the network device, the second indication information, where the second indication information is used to indicate the frequency hopping mode of transmitting a PUCCH with repetitions by the terminal device.

In an implementation, the frequency hopping mode includes at least one of :

frequency hopping within each slot; or
frequency hopping across slots.

In an implementation, the frequency hopping within each slot includes:

one slot includes multiple frequency hopping units, where different frequency hopping units in the same slot correspond to different frequency domain resources, one PUCCH is divided into multiple parts, and each part of the multiple parts is transmitted using a frequency hopping unit in the slot.

In an implementation, the frequency hopping across slots includes:

one slot includes one frequency hopping unit, where the frequency hopping units of adjacent slots correspond to different frequency domain resources, and one PUCCH is transmitted using one frequency hopping unit of one slot.

For a specific example of the network device to perform the method 300 of this embodiment, reference may be made to the related description of the network device such as the base station in the above method 200, which will not be repeated herein for the sake of brevity.

FIG. 4 is a schematic block diagram of a terminal device 400 according to an embodiment of the present disclosure. The terminal device 400 may include:

a processing unit 410, configured to acquire a number of repetitions for a PUCCH transmission before a dedicated PUCCH resource is configured.

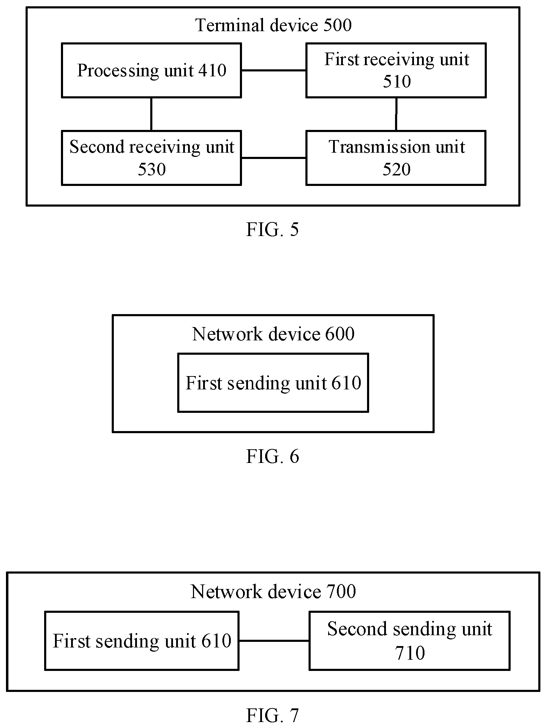

In an implementation, as shown in FIG. 5, a terminal device 500 further includes:

a first receiving unit 510, configured to receive first indication information, where the first indication information is used to indicate the number of repetitions for the PUCCH transmission.

In an implementation, the first indication information includes a first common PUCCH resource set index value; and

the processing unit is further configured to determine a number of repetitions for a PUCCH transmission corresponding to the first common PUCCH resource set index value based on the first common PUCCH resource set index value.

In an implementation, the first common PUCCH resource set index value is in a first range, and a second common PUCCH resource set index value is in a second range.

In an implementation, if the first range is different from the second range, the first common PUCCH resource set index value is greater than the second common PUCCH resource set index value.

In an implementation, a number of repetitions for a PUCCH transmission corresponding to the first common PUCCH resource set index value is greater than 1.

In an implementation, if the first range is the same as the second range, the number of repetitions for the PUCCH transmission corresponding to the first common PUCCH resource set index value is greater than or equal to 1.

In an implementation, the second common PUCCH resource set index value does not have a corresponding number of repetitions for a PUCCH transmission or a number of repetitions for a PUCCH transmission corresponding to the second common PUCCH resource set index value is equal to 1.

In an implementation, the first indication information is carried by downlink control information (DCI).

In an implementation, the first indication information carried by the DCI is a PUCCH resource indication field.

In an implementation, a value of the PUCCH resource indication field has a corresponding number of repetitions for a PUCCH transmission.

In an implementation, the value of the PUCCH resource indication field is used to determine a common PUCCH resource index value, and the common PUCCH resource index value has a corresponding number of repetitions for a PUCCH transmission.

In an implementation, the common PUCCH resource index value is calculated based on the value of the PUCCH resource indication field, the number of control channel elements (CCE) in a control resource set where the DCI is located, and an index value of a first CCE occupied by the DCI.

In an implementation, the first indication information is carried by the DCI for scheduling a TC-RNTI scrambled CRC and/or a RAR uplink grant of Msg3 PUSCH of a random access process.

In an implementation, the first indication information carried by the DCI for scheduling the RAR uplink grant of Msg3 PUSCH and/or the TC-RNTI scrambled CRC is a number of repetitions for a Msg3 transmission.

In an implementation, the number of repetitions for the PUCCH transmission is calculated based on the number of repetitions for the Msg3 transmission.

In an implementation, the number of repetitions for the PUCCH transmission is equal to the number of repetitions for the Msg3 transmission divided by a set value and rounded up.

In an implementation, the device further includes:

a transmission unit 520, configured to perform a PUCCH transmission with repetitions according to the number of repetitions for the PUCCH transmission in a case where the transmission with repetitions is needed.

In an implementation, the device further includes:

a second receiving unit 530, configured to receive second indication information, where the second indication information is used to indicate a frequency hopping mode of transmitting the PUCCH with repetitions by the terminal device.

In an implementation, the frequency hopping mode includes at least one of:

frequency hopping within each slot; or
frequency hopping across slots.

In an implementation, the frequency hopping within each slot includes:

one slot includes multiple frequency hopping units, where different frequency hopping units in the same slot correspond to different frequency domain resources, one PUCCH is divided into multiple parts, and each part of the multiple parts is transmitted using one frequency hopping unit in the slot.

In an implementation, the frequency hopping across slots includes:

one slot includes one frequency hopping unit, where frequency hopping units of adjacent slots correspond to different frequency domain resources, and one PUCCH is transmitted using one frequency hopping unit in one slot.

The terminal devices 400 and 500 of the embodiments of the present disclosure can implement the corresponding functions of the terminal devices in the aforementioned method 200 embodiments. The processes, functions, implementation methods and beneficial effects corresponding to each module (sub-module, unit or component, etc.) in the terminal devices 400 and 500 may be found in the corresponding description in the above method embodiments, and will not be repeated herein. It should be noted that the functions described in the various modules (sub-modules, units or components, etc.) in the terminal devices 400 and 500 of the application embodiments may be implemented by different modules (sub-modules, units or components, etc.) or by the same module (sub-module, unit or component, etc.).

FIG. 6 is a schematic block diagram of a network device 600 according to an embodiment of the present disclosure. The network device 600 may include:

a first sending unit 610, configured to send the first indication information, where the first indication information is used to indicate the number of repetitions for the PUCCH transmission before the dedicated PUCCH resource is configured.

In an implementation, the first indication information includes the first common PUCCH resource set index value, and the first common PUCCH resource set index value has the corresponding number of repetitions for the PUCCH transmission.

In an implementation, the first common PUCCH resource set index value is in the first range, and a second common PUCCH resource set index value is in the second range.

In an implementation, if the first range is different from the second range, the first common PUCCH resource set index value is greater than the second common PUCCH resource set index value.

In an implementation, the number of repetitions for the PUCCH transmission corresponding to the first common PUCCH resource set index value is greater than 1.

In an implementation, if the first range is the same as the second range, the number of repetitions for the PUCCH transmission corresponding to the first common PUCCH resource set index value is greater than or equal to 1.

In an implementation, the second common PUCCH resource set index value does not have the corresponding number of repetitions for the PUCCH transmission or a number of repetitions for a PUCCH transmission corresponding to the second common PUCCH resource set index value is equal to 1.

In an implementation, the first indication information is carried by system information.

In an implementation, a common PUCCH configuration parameter in the system information carries the first indication information.

In an implementation, the first indication information is carried by the downlink control information (DCI).

In an implementation, the first indication information carried by the DCI is the PUCCH resource indication field.

In an implementation, the value of the PUCCH resource indication field has the corresponding number of repetitions for the PUCCH transmission.

In an implementation, the value of the PUCCH resource indication field is used to determine the common PUCCH resource index value, and the common PUCCH resource index value has the corresponding number of repetitions for the PUCCH transmission.

In an implementation, the common PUCCH resource index value is calculated based on the value of the PUCCH resource indication field, the number of CCEs in the control resource set where the DCI is located, and the index value of the first CCE occupied by the DCI.

In an implementation, the first indication information is carried by the DCI for scheduling the TC-RNTI scrambled CRC and/or the RAR uplink grant of Msg3 PUSCH of the random access process.

In an implementation, the first indication information carried by the DCI for scheduling the RAR uplink grant of Msg3 PUSCH and/or the TC-RNTI scrambled CRC is the number of repetitions for theMsg3 transmissions.

In an implementation, the number of repetitions for the PUCCH transmission is calculated based on the number of repetitions for the Msg3 transmission.

In an implementation, the number of repetitions for the PUCCH transmission is equal to the number of repetitions for the Msg3 transmission divided by a set value and rounded up.

In an implementation, as shown in FIG. 7, a network device 700 further includes:
a second sending unit 710, configured to send the second indication information, where the second indication information is used to indicate the frequency hopping mode of transmitting the PUCCH with repetitions by the terminal device.

In an implementation, the frequency hopping mode includes at least one of the following: frequency hopping within each slot; frequency hopping across slots.

In an implementation, the frequency hopping within each slot includes:
one slot includes multiple frequency hopping units, where different frequency hopping units in the same slot correspond to different frequency domain resources, one PUCCH is divided into multiple parts, and each part of the multiple parts is transmitted using one frequency hopping unit in the slot.

In an implementation, the frequency hopping across slots includes:
one slot includes one frequency hopping unit, where the frequency hopping units of adjacent slots correspond to different frequency domain resources, and one PUCCH is transmitted using one frequency hopping unit in one slot.

The network devices 600 and 700 of the embodiments of the present disclosure can implement the corresponding functions of the network devices in the aforementioned embodiments of the method 300. The corresponding processes, functions, implementation methods and beneficial effects of each module (sub-module, unit or component, etc.) in the network devices 600 and 700 may be found in the corresponding description in the above method embodiments, and will not be repeated herein. It should be noted that the functions described in the various modules (sub-modules, units or components, etc.) in the network devices 600 and 700 of the application embodiments may be implemented by different modules (sub-modules, units or components, etc.) or by the same module (sub-module, unit or component, etc.).

The transmission method provided in the embodiments of the present disclosure is a PUCCH transmission with repetitions method before the dedicated PUCCH resource is configured. For example, an additional index value and its corresponding number of repetitions for the transmission may be added to a table of a common PUCCH resource set, or only the number of repetitions for the transmission corresponding to an existing index value may be added to indicate the number of repetitions for the PUCCH transmission before the dedicated PUCCH resource is configured. For another example, a new system parameter may be introduced in the system information to specifically indicate the number of repetitions for the PUCCH transmission before the dedicated PUCCH resource is configured; for another example, the number of repetitions for the PUCCH transmission may be associated with PUCCH resource indication or a number of repetitions for other channel transmission, such as the Msg3 repetition transmission.

For frequency hopping processing of the PUCCH transmission with repetitions before the dedicated PUCCH resource is configured, only the frequency hopping within each slot or only frequency hopping across slots may be performed, or a base station may indicate through a system parameter whether to perform the frequency hopping within each slot or the frequency hopping across slots.

The following are several examples: solutions of a mechanism of a PUCCH transmission with repetitions and an indication of a number of repetitions:

Example 1: the indication of the number of repetitions is added to the common PUCCH resource set table

The table of the common PUCCH resource set in the related art is shown in Table 1 in the related art. Each group of common PUCCH resource sets corresponds to one row in Table 1, corresponds to a PUCCH format, a start symbol, a number of symbols, a PRB offset and a cyclic shift index set, and only supports a single PUCCH transmission.

In order to introduce the PUCCH transmission with repetitions before the dedicated PUCCH resource is configured in a communication scenario (such as an NTN system) with limited coverage performance, it is possible to consider introducing an additional index value in the table of common PUCCH resource set for configuring the PUCCH transmission with repetitions, for example, reference Table 2.

Table 2. Common PUCCH resource set in the NTN scenario

| Index | PUCCH format | Starting symbol | Number of symbols | PRB offset $RB_{BWP}^{offset}$ | Initial CS index set | Number of repetitions for transmission |
|---|---|---|---|---|---|---|
| 0 | 0 | 12 | 2 | 0 | {0, 3} | - or 1 |
| ... | ... | ... | ... | ... | ... | - or 1 |
| 15 | 1 | 0 | 14 | $\left\lfloor N_{\mathrm{BWP}}^{\mathrm{size}}/4 \right\rfloor$ | {0, 3, 6, 9} | - or 1 |
| 16 | 1 | 0 | 14 | 0 | {0, 3, 6, 9} | $X_{16}$ |
| 17 | 1 | 0 | 14 | 0 | {0, 3, 6, 9} | $X_{17}$ |
| 18 | 1 | 0 | 14 | 0 | {0, 3, 6, 9} | $X_{18}$ |

Taking Table 2 as an example, additional index values 16 to 18 are introduced on the basis of the common PUCCH resource indication information, and a column is added for indicating the number of repetitions for the PUCCH transmission. At this time, index values 0 to 15 may still be used for traditional common PUCCH resource determination, and indication information of the number of repetitions for the PUCCH transmission is not introduced (for example, "-" represents that the number of repetitions for transmission is empty) or the number of repetitions for transmission is recorded as 1. Table 2 is used to facilitate compatibility with traditional common PUCCH resource configuration manners. Whether the transmission with repetitions is required may be determined based on the range of the index value configured in the system information. For example, if the index value configured by the system information is in the range of 0 to 15, the transmission with repetitions does not need to be performed, but if the index value configured by the system information is in the range of 16 to 18, the transmission with repetitions needs to be performed. Herein, $X_{16}$, $X_{17}$, and $X_{18}$ represent the corresponding number of repetitions for the PUCCH transmission. For example, $X_{16}$, $X_{17}$, and $X_{18}$ may be greater than 1. For another example, $X_{16}$, $X_{17}$, and $X_{18}$ may be values of the supported number of repetitions for a PUCCH, such as the currently supported number of repetitions for the PUCCH transmission, that is, a value of {2, 4, 8}, or may be other values. The specific values of the PUCCH format, starting symbol, number of symbols, PRB offset, initial CS index set, etc. corresponding to different index values in Table 2, such as 16 to 18, are only examples and not limitations, and may also be changed to other values.

For example, for traditional cells that do not need to improve coverage performance, the base station still configures index values 0 to 15, and a UE determines the common PUCCH resource according to the indicated index value and does not perform the PUCCH transmission with repetitions. The newly added index values, such as 16 to 18, are used to support the PUCCH transmission with repetitions.

The base station may indicate to the UE the number of repetitions for the PUCCH transmission before the dedicated PUCCH resource is configured by configuring different index values according to the coverage performance of the current cell. For example, if finding that the coverage performance of the current cell is poor, the base station may configure the index value 18 in Table 2 in a cell-level PUCCH parameter. After receiving the configuration information, the UE finds that the number of repetitions for the PUCCH transmission is $X_{18}=8$ based on 18. Then, for each PUCCH before the dedicated PUCCH resource is configured, the transmission with repetitions are performed 8 times, thereby improving the coverage performance.

The above solution introduces additional resource configuration for the PUCCH transmission with repetitions on the basis of multiplexing common PUCCH resource configuration. At this time, the number of candidate index values in the common PUCCH resource table increases. For example, in the cell-level PUCCH parameters of NTN, the candidate index values are {0, 1, ..., 18}, that is, the number of candidate index values is greater than 16.

In addition, one column may be introduced in the common PUCCH resource set table to exemplarily indicate the number of repetitions for the PUCCH transmission before the dedicated PUCCH resource is configured, for example:

Table 3. Common PUCCH resource set in NTN scenario

| Index | PUCCH format | Starting symbol | Number of symbols | PRB offset $RB_{BWP}^{offset}$ | Initial CS index set | Number of repetitions for transmission |
|---|---|---|---|---|---|---|
| 0 | 0 | 12 | 2 | 0 | {0, 3} | $X_1$ |
| 1 | 0 | 12 | 2 | 0 | {0, 4, 8} | $X_2$ |
| 2 | 0 | 12 | 2 | 3 | {0, 4, 8} | $X_3$ |

(continued)

| Index | PUCCH format | Starting symbol | Number of symbols | PRB offset $RB_{BWP}^{offset}$ | Initial CS index set | Number of repetitions for transmission |
|---|---|---|---|---|---|---|
| 3 | 1 | 10 | 4 | 0 | {0, 6} | $X_4$ |
| 4 | 1 | 10 | 4 | 0 | {0, 3, 6, 9} | $X_5$ |
| 5 | 1 | 10 | 4 | 2 | {0, 3, 6, 9} | $X_6$ |
| 6 | 1 | 10 | 4 | 4 | {0, 3, 6, 9} | $X_7$ |
| 7 | 1 | 4 | 10 | 0 | {0, 6} | $X_8$ |
| 8 | 1 | 4 | 10 | 0 | {0, 3, 6, 9} | $X_9$ |
| 9 | 1 | 4 | 10 | 2 | {0, 3, 6, 9} | $X_{10}$ |
| 10 | 1 | 4 | 10 | 4 | {0, 3, 6, 9} | $X_{11}$ |
| 11 | 1 | 0 | 14 | 0 | {0, 6} | $X_{12}$ |
| 12 | 1 | 0 | 14 | 0 | {0, 3, 6, 9} | $X_{13}$ |
| 13 | 1 | 0 | 14 | 2 | {0, 3, 6, 9} | $X_{14}$ |
| 14 | 1 | 0 | 14 | 4 | {0, 3, 6, 9} | $X_{15}$ |
| 15 | 1 | 0 | 14 | $\left\lfloor N_{BWP}^{size}/4 \right\rfloor$ | {0, 3, 6, 9} | $X_{16}$ |

At this time, a number of candidate index values in the common PUCCH resource set table is still 16, that is, the candidate index values in the cell-level PUCCH parameters of NTN are {0, 1, ..., 15}, and each row corresponds to the number of repetitions for the PUCCH transmission For example, the numbers of repetitions for the PUCCH transmission $X_3$, $X_7$ or $X_{11}$ corresponding to index values 3, 7, and 11 respectively are 1, and the numbers of repetitions for the PUCCH transmission corresponding to other index values are greater than 1. The base station may configure different index values to indicate to the UE the number of repetitions for the PUCCH transmission before the dedicated PUCCH resource is configured. For example, if finding that the current cell coverage can meet the performance requirements, the base station may configure the index value with the number of repetitions for the PUCCH transmission being 1, such as index values 3, 7, and 11, that is, there is no need to perform a PUCCH transmission with repetitions. If finding that the current cell coverage performance is poor, the base station may configure an index value with the number of repetitions for the PUCCH transmission greater than 1, such as 10, 14, and perform multiple times (such as 8 times) of repetitions for the PUCCH transmission. Table 3 is adopted, which has the same signaling overhead as the traditional configuration of the common PUCCH resource set index value.

Example 2: the system information indicates the number of repetitions for the PUCCH transmission

Example 1 modifies the common PUCCH resource set table and configures different numbers of repetitions for the PUCCH transmission for the UE by indicating different index values without introducing additional system parameters. The number of repetitions for the PUCCH transmission will be bound to a specific PUCCH resource. For example, on the PUCCH resource corresponding to the index value 3 in Table 3, the PUCCH transmission with repetitions may be performed 8 times only. Example 2 may further improve the configuration flexibility.

In the system information, for example, in the common PUCCH parameters of SIB1 of the system information, a new system parameter is introduced, which is specifically used to indicate the number of repetitions for the PUCCH transmission before the dedicated PUCCH resource is configured. For example, the new system parameter is *NTN-nrofSlots={2,4,8}*, which represents that the number of repetitions for the PUCCH transmission may be selected from 2, 4 or 8. The base station may flexibly configure the number of repetitions for the PUCCH transmission and a common PUCCH resource.

For example, if the base station indicates that the index value in Table 1 is 11, and the number of repetitions for the PUCCH transmission is indicated as 8 in the system parameters notified by the system information, the UE may perform the PUCCH transmission with repetitions 8 times on the common PUCCH resource determined based on the index value 11. By decoupling the common PUCCH resource and the number of repetitions for the PUCCH transmission, more flexible resource indication may be achieved.

Example 3: Each UE independently configures the number of repetitions for the PUCCH transmission

Example 1 and Example 2 may use the cell-level system information to indicate the number of repetitions for the PUCCH transmission In this case, all UEs in the cell have the same number of repetitions for the PUCCH transmission before the dedicated PUCCH resource is configured. Although there is little difference in coverage performance within a single cell in the NTN scenario, independently indicating the number of repetitions for the PUCCH transmission for each UE can still further improve system efficiency.

Table 1 predefines 16 groups of common PUCCH resource sets in the form of index values, and each group of PUCCH resource sets further includes 16 PUCCH resources. For example, the PUCCH resource index value is $r_{PUCCH}$, exists $0 \leq r_{PUCCH} \leq 15$, and the determination formula of $r_{PUCCH}$ is as follows:

$$r_{PUCCH} = \left\lfloor \frac{2 \cdot n_{CCE,0}}{N_{CCE}} \right\rfloor + 2 \cdot \Delta_{PRI}$$

$N_{CCE}$ is a number of CCEs in the control resource set where the DCI is located, $n_{CCE,0}$ is an index value of the first CCE occupied by the DCI, and $\Delta_{PRI}$ is a value of the PUCCH resource indication field in the DCI, which is indicated by 3 bits.

In a communication scenario with limited coverage performance, such as the NTN system, a PUCCH resource index value in a PUCCH resource set may be associated with the number of repetitions for the PUCCH transmission.

For example, as shown in Table 4, the 3-bit PUCCH resource indication field in the DCI may simultaneously indicate the number of repetitions for the PUCCH transmission. For example, '000' corresponds to a single time of PUCCH transmission, '001' corresponds to 2 times of transmission with repetitions, ..., '111' corresponds to 8 times of PUCCH transmission with repetitions, and so on. If the value of the PUCCH resource indication field received by the UE is '001', it represents that the number of repetitions for the PUCCH transmission before the dedicated PUCCH resource is configured is 2. A mapping relationship in Table 4 is only an example, and other mapping relationships may also be used, for example, '001' corresponds to 4 times of transmission with repetitions, '011' corresponds to 6 times of transmission with repetitions, or the like.

Table 4. The mapping from PUCCH resource indication field to the number of repetition for the PUCCH transmission

| PUCCH resource indication | Number of repetitions for the PUCCH transmission |
|---|---|
| '000' | 1 |
| '001' | 2 |
| '010' | 3 |
| '011' | 4 |
| '100' | 5 |
| '101' | 6 |
| '110' | 7 |
| '111' | 8 |

Or, different PUCCH resource index values $r_{PUCCH}$ correspond to different numbers of repetitions for the PUCCH transmission, such as $r_{PUCCH} = 0$ corresponding to a single time of PUCCH transmission, $r_{PUCCH} = 1$ corresponding to 2 times of PUCCH transmission with repetitions, ..., $r_{PUCCH} = 15$ corresponding to 16 times of PUCCH transmission with repetitions.

Based on the above method, the base station may indirectly indicate to the UE the number of repetitions for the PUCCH transmission before the dedicated PUCCH resource is configured by indicating different PUCCH resource index values to the UE. At this time, the base station may indicate different number of repetitions for the PUCCH transmission to different UEs in the cell based on the UE coverage performance, thereby improving system efficiency without introducing additional control information fields.

Example 4: Binding to the number of repetitions for a Msg3

The Msg3 transmission with repetitions during a random access process, and candidate number of repetitions for the transmission include {1,2,3,4,7,8,12,16}. For a scenario with limited coverage performance, the base station selects four values from the number of repetitions for the Msg3 candidate transmission and indicates them to the UE through the system parameter such as a parameter in SIB1. The actual number of repetitions for the Msg3 transmission is then indicated to the UE by scheduling the highest 2 bits of an MCS information field in the RAR uplink grant (or DCI 0_0 with TC-RNTI scrambled CRC) of an Msg3 PUSCH.

Since the PUCCH is transmitted after Msg3, it is possible to consider associating the number of repetitions for the PUCCH transmission with the number of repetitions for the Msg3 transmission. For example, the number of repetitions for the PUCCH transmission before the dedicated PUCCH resource is configured is implicitly deduced through the number of repetitions for the Msg3 transmission.

If the number of repetitions for the Msg3 transmission is M and the number of repetitions for the PUCCH transmission is N, then these two numbers of repetitions for the transmission may satisfy a certain multiple conversion relationship, such as $N = \lceil M/K \rceil$. Since the coverage performance of PUCCH is generally better than the coverage performance of Msg3, the number of repetitions for the PUCCH transmission may be less than the number of repetitions for the Msg3 transmission.

For example, when K=2, if the base station indicates that the number of repetitions for the Msg3 transmission is M=8, the UE may further deduce that the number of repetitions for the PUCCH transmission is $N = \lceil 8/2 \rceil = 4$. Considering that there may be cases where M and K are not integrable, rounding up is introduced into the formula. For example, if the base station indicates that the number of repetitions for the Msg3 transmission is M=3, the UE may deduce the number of repetitions for the PUCCH transmission.

Example 5: The UE performs a PUCCH transmission with repetitions

If the UE is indicated to perform the PUCCH transmission with repetitions on N slots before the dedicated PUCCH resource is configured, the UE repeats the PUCCH transmissions on these N slots.

The PUCCH transmissions on the N slots may have the same number of consecutive symbols, and the number of consecutive symbols is determined by a number of symbols corresponding to the common PUCCH resource set index value indicated by the base station.

In addition, the PUCCH transmissions on the N slots may have the same starting symbol, and the starting symbol is determined by a starting symbol index corresponding to the common PUCCH resource set index value indicated by the base station.

In one case, if the UE performs frequency hopping across slots during the PUCCH transmission with repetitions, the UE performs frequency hopping on each of the N slots. For example, the UE sends the PUCCH starting from a first PRB in an even-numbered slot among the N slots, and sends the PUCCH starting from a second PRB in an odd-numbered slot among the N slots. The slot indicated by the base station to the UE for a first PUCCH transmission may be recorded as 0, and each of the N slots is counted, regardless of whether the UE sends a PUCCH in this slot. The indexes of the first PRB and the second PRB may be determined according to a common PUCCH resource PRB index determination formula in the related art.

In another case, if the UE performs frequency hopping within each slot during the PUCCH transmission with repetitions, the UE has the same frequency hopping pattern between the first PRB and the second PRB in each slot. The indexes of the first PRB and the second PRB may be determined according to the common PUCCH resource PRB index determination formula in the related art.

For the PUCCH transmission in one slot, if the UE finds that the number of symbols available for the PUCCH transmission is less than the number of symbols corresponding to the common PUCCH resource set index value indicated by the base station, the UE does not send PUCCH in the slot.

If the UE wants to send PUCCH on N slots, but does not send the PUCCH on one of the slots due to a collision with another PUCCH transmission, the UE counts this slot into the N slots.

Example 6: Frequency hopping corresponding to repetition PUCCH transmissions

In the related art, only single time of PUCCH transmission is supported before the dedicated PUCCH resource is configured, and frequency hopping within each slot is performed, that is, for a PUCCH with a number L of symbols, the number of symbols in the first frequency hopping unit is $\lfloor L/2 \rfloor$, and the number of symbols in the second frequency hopping unit is $L - \lfloor L/2 \rfloor$. And the starting PRB indexes of the first and second frequency hopping units may be determined according to the common PUCCH resource PRB index determination formula in the related art, the starting PRB index of the first frequency hopping unit is $RB_1$ and the starting PRB index of the second frequency hopping unit is $RB_2$.

After introducing the PUCCH transmission with repetitions before the dedicated PUCCH resource is configured, it is necessary to consider how to further perform frequency hopping between the PUCCH transmission with repetitions. An exemplary solution is as follows.

For the PUCCH transmission with repetitions before the dedicated PUCCH resource is configured, the frequency hopping across slots is not performed, and the frequency hopping within each slot is always performed. For example, assuming that the number of PUCCH repetitions before the dedicated PUCCH resource is configured is N, which corresponds to N slots, and the first PUCCH transmission slot is defined as slot 0, then the PUCCH transmission in each slot performs frequency hopping within each slot, and the frequency hopping patterns across slots are the same.

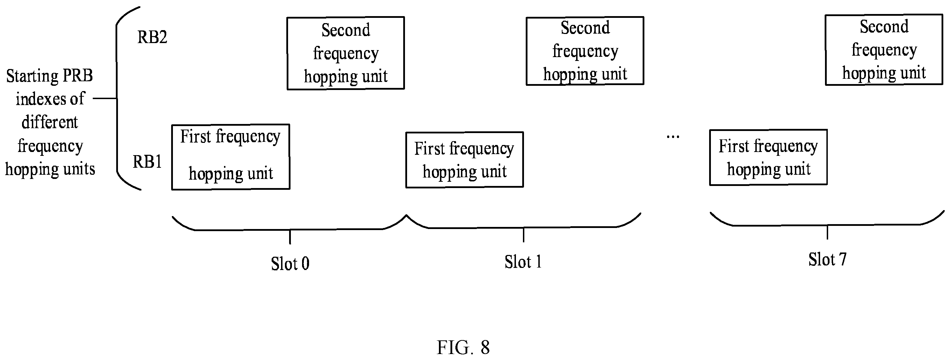

FIG. 8 shows that the PUCCH transmission with repetitions only perform frequency hopping within each slot. Taking FIG. 8 as an example, the number of symbols occupied by the PUCCH transmission in each slot is 14, then the first frequency hopping unit corresponds to first 7 symbols, and the starting PRB index is $RB_1$; the second frequency hopping unit corresponds to the last 7 symbols, and the starting PRB index is $RB_2$. At this time, for the PUCCH transmission with repetitions, the frequency hopping pattern of each slot is the same. The UE transmits the first 7 symbols of the PUCCH in the first frequency hopping unit of the slot 0, and transmits the last 7 symbols of the PUCCH in the second frequency hopping unit of the slot 0. The UE transmits the first 7 symbols of the PUCCH in the first frequency hopping unit of a slot 1, and transmits the last 7 symbols of the PUCCH in the second frequency hopping unit of the slot 1. And so on, until the number of PUCCH transmissions performed by the UE in a slot 7 is equal to the number of repetitions for the PUCCH transmission 8.

For the PUCCH transmission with repetitions before the dedicated PUCCH resource is configured, the frequency hopping within each slot is not performed, and the frequency hopping across slots is always performed. That is, assuming that the number of PUCCH repetitions before the dedicated PUCCH resource is configured is N, which corresponds to N slots, and the first PUCCH transmission slot is defined as the slot 0, then the first frequency hopping unit corresponds to an even-numbered slot, and the starting PRB index is $RB_1$; then the second frequency hopping unit corresponds to an odd-numbered slot, and the starting PRB index is $RB_2$.

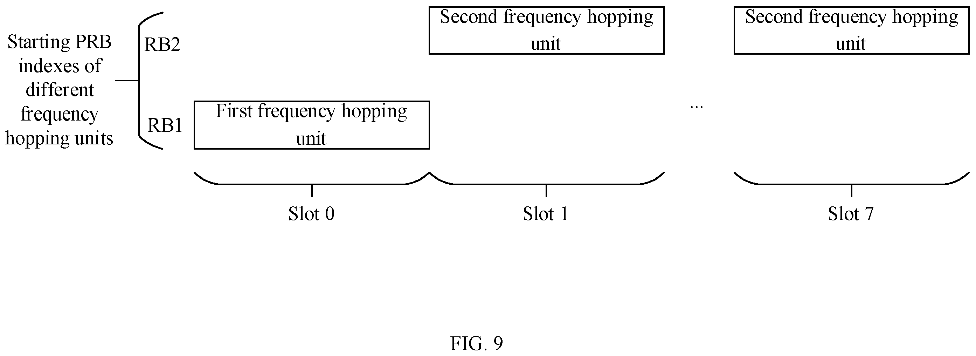

FIG. 9 shows that the PUCCH transmission with repetitions only performs frequency hopping across slots. Taking FIG. 9 as an example, the number of PUCCH repetitions is N=8, which corresponds to 8 slots, and the first PUCCH transmission slot is defined as the slot 0. The first frequency hopping unit corresponds to the even-numbered slots, that is, slots 0, 2, 4, and 6, and the starting PRB index is $RB_1$; the second frequency hopping unit corresponds to the odd-numbered slots, that is, 1, 3, 5, and 7, and the starting PRB index is $RB_2$. The UE transmits the PUCCH in the first frequency hopping unit of the slot 0 and transmits the PUCCH in the second frequency hopping unit of the slot 1. The UE transmits the PUCCH in the first frequency hopping unit of the slot 2 and transmits the PUCCH in the second frequency hopping unit of the slot 3. And so on, until the number of PUCCH transmissions performed by UE in the slot 7 is equal to the number of repetitions for the PUCCH transmission 8.

The frequency hopping mode of the PUCCH transmission with repetitions before the dedicated PUCCH resource is configured may also be configured through the system information configuration, such as SIB1 in the system information. For example, the configured candidate frequency hopping modes include {frequency hopping across slots, frequency hopping within each slot}. The base station may flexibly select a frequency hopping mode to configure for the UE, thereby obtaining the optimal frequency hopping performance.

It should be noted that no matter which of the above frequency hopping modes is adopted, when the PUCCH transmission with repetitions is not performed, the traditional frequency hopping within each slot mode may still be used.

The PUCCH transmission with repetitions method before the dedicated PUCCH resource is configured in the embodiments of the present disclosure includes at least one of the following features.

The additional index value and the number of repetitions for the transmission are added to the common PUCCH resource set table, or only the number of repetitions for the PUCCH transmission before the dedicated PUCCH resource is configured corresponding to the index value is added, without introducing a new system parameters.

The new system parameter is introduced in the system information to exemplarily indicate the number of repetitions for the PUCCH transmission before the dedicated PUCCH resource is configured, so as to achieve more flexible PUCCH resource and repetition number indication.

The number of repetitions for the PUCCH transmission is associated with the PUCCH resource indication or the number of repetitions for other channel transmission, and the number of repetitions for the PUCCH transmission may be individually indicated for each UE.

For the frequency hopping processing of the PUCCH transmission with repetitions before the dedicated PUCCH resource is configured, if only the frequency hopping across slots is performed, or only the frequency hopping within each slot is performed, the base station and the UE may have a common understanding of the frequency hopping mode of the PUCCH transmission with repetitions. If the base station indicates through the system parameter whether to perform the frequency hopping across slots or the frequency hopping within each slot, a flexible frequency hopping mode may be used to achieve optimal performance.

In addition to being applicable to the NTN system, the solutions of the embodiments of the present disclosure may also be extended to any system that applies the PUCCH transmission with repetitions before the dedicated PUCCH resource is configured.

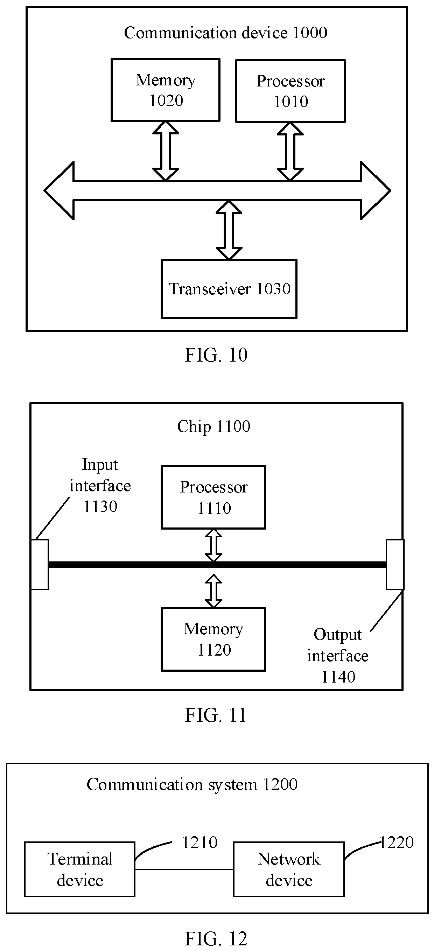

FIG. 10 is a schematic structural diagram of a communication device 1000 according to the embodiments of the present disclosure. The communication device 1000 includes a processor 1010, and the processor 1010 may call a computer program from a memory and run the computer program, so as to enable the communication device 1000 to implement the method in the embodiments of the present disclosure.

In an implementation, the communication device 1000 may further include a memory 1020. The processor 1010 may call a computer program from a memory 1020 and run the computer program, so as to enable the communication device 1000 to implement the method in the embodiments of the present disclosure.

The memory 1020 may be a separate device independent of the processor 1010, or may be integrated into the processor 1010.

In an implementation, the communication device 1000 may further include a transceiver 1030, and the processor 1010 may control the transceiver 1030 to communicate with other devices, specifically, may send information or data to other devices, or receive information or data sent from other devices.

The transceiver 1030 may include a transmitter and a receiver. The transceiver 1030 may further include an antenna, and the number of the antenna(s) may be one or more.

In an implementation, the communication device 1000 may be the network device of the embodiments of the present disclosure, and the communication device 1000 may implement the corresponding processes implemented by the network device in each method of the embodiments of the present disclosure, which will not be repeated herein for the sake of brevity.

In an implementation, the communication device 1000 may be the terminal device of the embodiments of the present disclosure, and the communication device 1000 may implement the corresponding processes implemented by the terminal device in each method of the embodiments of the present disclosure, which will not be repeated herein for the sake of brevity.

FIG. 11 is a schematic structural diagram of a chip 1100 according to the embodiments of the present disclosure. The chip 1100 includes a processor 1110, and the processor 1110 may call a computer program from a memory and run the computer program to implement the method in the embodiments of the present disclosure.

In an implementation, the chip 1100 may further include a memory 1120. The processor 1110 may call a computer program from a memory 1120 and run the computer program to implement the method performed by the terminal device or the network device in the embodiments of the present disclosure.

The memory 1120 may be a separate device independent of the processor 1110, or may be integrated into the processor 1110.

In an implementation, the chip 1100 may further include an input interface 1130. The processor 1110 may control the input interface 1130 to communicate with other devices or chips, and specifically, may obtain information or data sent from other devices or chips.

In an implementation, the chip 1100 may further include an output interface 1140. The processor 1110 may control the output interface 1140 to communicate with other devices or chips, and specifically, may output information or data to other devices or chips.

In an implementation, the chip may be applied to the network device in the embodiments of the present disclosure, and the chip may implement the corresponding processes implemented by the network device in various methods of the embodiments of the present disclosure, which will not be repeated herein for the sake of brevity.

In an implementation, the chip may be applied to the terminal device in the embodiments of the present disclosure, and the chip may implement the corresponding processes implemented by the terminal device in the various methods of the embodiments of the present disclosure, which will not be repeated herein for the sake of brevity.

The chips used in the network device and the terminal device may be the same chip or different chips.

It should be understood that the chip mentioned in the embodiments of the present disclosure may also be called a system-level chip, a system chip, a chip system or a system-on-chip chip, etc.

The processor mentioned above may be a general purpose processor, a digital signal processor (DSP), a field programmable gate array (FPGA), an application specific integrated circuit (ASIC) or other programmable logic devices, transistor logic devices, discrete hardware components, etc. The general purpose processor mentioned above may be a microprocessor or any conventional processors.

The above-mentioned memory may be a volatile memory or a non-volatile memory, or may include both volatile and nonvolatile memories. Here, the non-volatile memory may be a read-only memory (ROM), a programmable ROM (PROM), an erasable PROM (EPROM), an electrically EPROM (EEPROM), or a flash memory. The volatile memory may be a random access memory (RAM).

It should be understood that the above-mentioned memory is exemplary but not limiting illustration, e.g., the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM) and a direct rambus RAM (DR RAM), or the like. That is, the memories in the embodiments of the present disclosure are intended to include but are not limited to these and any other suitable types of memories.

FIG. 12 is a schematic block diagram of a communication system 1200 according to the embodiments of the present disclosure. The communication system 1200 includes a terminal device 1210 and a network device 1220.

The terminal device 1210 is configured to acquire a number of repetitions for a PUCCH transmission before the dedicated PUCCH resource is configured.

In an implementation, the network device 1220 is configured to send first indication information, where the first indication information is used to indicate the number of repetitions for the PUCCH transmission before the dedicated PUCCH resource is configured.

Herein, the terminal device 1210 may be configured to implement the corresponding functions implemented by the terminal device in the above methods, and the network device 1220 may be configured to implement the corresponding functions implemented by the network device in the above methods, which will not be repeated herein for the sake of brevity.

In the above embodiments, all or part of them may be implemented by software, hardware, firmware or any combination thereof. When implemented using software, all or part of the implementation may be in the form of a computer program product. The computer program product includes one or more computer instructions. When the computer program instructions are loaded and executed on a computer, the processes or functions in the embodiments of the present disclosure are generated in whole or in part. The computer may be a general purpose computer, a special purpose computer, a computer network, or other programmable apparatuses. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center via wired (e.g., coaxial cable, optical fiber, digital subscriber line (DSL)) or wireless (e.g., infrared, wireless, microwave, etc.) means. The computer-readable storage medium may be any available medium that can be accessed by a computer or a data storage device such as a server or a data center that includes one or more available medium. The available medium may be a magnetic medium (e.g., a floppy disk, a hard disk, a magnetic tape), an optical medium (e.g., a DVD), or a semiconductor medium (e.g., a solid state disk (SSD)), or the like.

It should be understood that in the various embodiments of the present disclosure, the magnitude of the serial sequence numbers of the above-mentioned processes does not mean the order of execution. The execution order of each process should be determined by its function and internal logic, and should not constitute any limitation on the implementation process of the embodiments of the present disclosure.

Those skilled in the art may clearly understand that, for the convenience and brevity of description, the specific working processes of the systems, apparatus and units described above may refer to the corresponding processes in the aforementioned method embodiments and will not be repeated here.

The scope of the invention is defined by the independent claims. Preferred embodiments are defined by the dependent claims.

**Claims**

1. A transmission method, comprising:

   acquiring (S210), by a terminal device, a number of repetitions for a physical uplink control channel, PUCCH, transmission before a dedicated PUCCH resource is configured; and
   receiving, by the terminal device, second indication information, wherein the second indication information is used to indicate a frequency hopping mode of transmitting a PUCCH with repetitions by the terminal device;
   wherein the frequency hopping mode of transmitting the PUCCH with repetitions by the terminal device comprises at least one of: frequency hopping within each slot; or frequency hopping across slots; wherein responsive to that the terminal device performs the frequency hopping within each slot during a PUCCH transmission with repetitions, frequency hopping patterns between a first physical resource block, PRB, and a second PRB of the terminal device in each of N slots are the same; and indexes of the first PRB and the second PRB are determined according to an index of a PRB corresponding to a common PUCCH resource.

2. The method according to claim 1, wherein the method further comprises:
   receiving, by the terminal device, first indication information, wherein the first indication information is used to indicate the number of repetitions for the PUCCH transmission.

3. The method according to claim 2, wherein the first indication information is carried by a system information; or the first indication information is carried by downlink control information, DCI.

4. The method according to any one of claims 1 to 3, wherein the method further comprises:

in a case where the terminal device needs to perform a PUCCH transmission with repetitions before the dedicated PUCCH resource is configured, transmitting, by the terminal device according to the number of repetitions for the PUCCH transmission, a PUCCH with repetitions before the dedicated PUCCH resource is configured.

5. The method according to claim 1, wherein responsive to that the terminal device acquires that the number of repetitions for the PUCCH transmission before the dedicated PUCCH resource is configured is N, the terminal device is instructed to transmit a PUCCH with repetitions on N slots, before the dedicated PUCCH resource is configured.

6. The method according to claim 5, wherein PUCCH transmissions on the N slots have a same number of consecutive symbols, and the number of consecutive symbols is determined by a number of symbols corresponding to a common PUCCH resource set index value indicated by a network device; and/or
PUCCH transmissions on the N slots have a same starting symbol, and the starting symbol is determined by a starting symbol index corresponding to a common PUCCH resource set index value indicated by a network device.

7. The method according to claim 1 or 4, wherein the frequency hopping within each slot comprises:
one slot comprises a plurality of frequency hopping units, wherein different frequency hopping units in a same slot correspond to different frequency domain resources, one PUCCH is divided into a plurality of parts, and each part of the plurality of parts is transmitted using one frequency hopping unit in the slot.

8. A transmission method, comprising:

sending (S310), by a network device, first indication information, wherein the first indication information is used to indicate a number of repetitions for a physical uplink control channel, PUCCH, transmission before a dedicated PUCCH resource is configured; and
sending, by the network device, second indication information, wherein the second indication information is used to indicate a frequency hopping mode of transmitting a PUCCH with repetitions by a terminal device;
wherein the frequency hopping mode of transmitting the PUCCH with repetitions by the terminal device comprises at least one of: frequency hopping within each slot; or frequency hopping across slots; wherein responsive to that the terminal device performs the frequency hopping within each slot during a PUCCH transmission with repetitions, frequency hopping patterns between a first physical resource block, PRB, and a second PRB of the terminal device in each of N slots are the same; and indexes of the first PRB and the second PRB are determined according to an index of a PRB corresponding to a common PUCCH resource.

9. The method according to claim 8, wherein the first indication information is carried by a system information; or the first indication information is carried by downlink control information, DCI.

10. The method according to claim 8, wherein the frequency hopping within each slot comprises:
one slot comprises a plurality of frequency hopping units, wherein different frequency hopping units in a same slot correspond to different frequency domain resources, one PUCCH is divided into a plurality of parts, and each part of the plurality of parts is transmitted using one frequency hopping unit in the slot.

11. A terminal device (1000), comprising: a processor (1010) and a memory (1020), wherein the memory (1020) is configured to store a computer program, the processor (1010) is configured to call and run the computer program stored in the memory (1020), causes the terminal device (1000) to perform the method according to any one of claims 1 to 7.

12. A network device (1000), comprising: a processor (1010) and a memory (1020), wherein the memory (1020) is configured to store a computer program, the processor (1010) is configured to call and run the computer program stored in the memory (1020), causes the network device (1000) to perform the method according to any one of claims 8 to 10.

**Patentansprüche**

1. Übertragungsverfahren, umfassend:

Erfassen (S210) einer Anzahl von Wiederholungen für eine Übertragung eines physikalischen Uplink-Steuerkanals, PUCCH, durch eine Endgerätevorrichtung, bevor eine dedizierte PUCCH-Ressource konfiguriert wird;

und

Empfangen von zweiten Anzeigeinformationen durch die Endgerätevorrichtung, wobei die zweiten Anzeigeinformationen verwendet werden, um einen Frequenzsprungmodus für das Übertragen eines PUCCH mit Wiederholungen durch die Endgerätevorrichtung anzuzeigen;

wobei der Frequenzsprungmodus für das Übertragen des PUCCH mit Wiederholungen durch die Endgerätevorrichtung mindestens eines umfasst von: Frequenzsprung innerhalb jedes Schlitzes; oder Frequenzsprung über Schlitze hinweg; wobei in Reaktion darauf, dass die Endgerätevorrichtung den Frequenzsprung innerhalb jedes Schlitzes während einer PUCCH-Übertragung mit Wiederholungen durchführt, Frequenzsprungmuster zwischen einem ersten physikalischen Ressourcenblock, PRB, und einem zweiten PRB der Endgerätevorrichtung in jedem von N Schlitzen dieselben sind; und Indizes des ersten PRB und des zweiten PRB gemäß einem Index eines PRB bestimmt werden, der einer gemeinsamen PUCCH-Ressource entspricht.

2. Verfahren nach Anspruch 1, wobei das Verfahren weiter umfasst:
Empfangen von ersten Anzeigeinformationen durch die Endgerätevorrichtung, wobei die ersten Anzeigeinformationen verwendet werden, um die Anzahl von Wiederholungen für die PUCCH-Übertragung anzuzeigen.

3. Verfahren nach Anspruch 2, wobei die ersten Anzeigeinformationen durch eine Systeminformation übermittelt werden; oder
die ersten Anzeigeinformationen durch Downlink-Steuerinformationen, DCI, übermittelt werden.

4. Verfahren nach einem der Ansprüche 1 bis 3, wobei das Verfahren weiter umfasst:
falls die Endgerätevorrichtung eine PUCCH-Übertragung mit Wiederholungen durchführen muss, bevor die dedizierte PUCCH-Ressource konfiguriert wird, Übertragen eines PUCCH mit Wiederholungen durch die Endgerätevorrichtung gemäß der Anzahl von Wiederholungen für die PUCCH-Übertragung, bevor die dedizierte PUCCH-Ressource konfiguriert wird.

5. Verfahren nach Anspruch 1, wobei in Reaktion darauf, dass die Endgerätevorrichtung erfasst, dass die Anzahl von Wiederholungen für die PUCCH-Übertragung, bevor die dedizierte PUCCH-Ressource konfiguriert wird, N beträgt, die Endgerätevorrichtung angewiesen wird, einen PUCCH mit Wiederholungen in N Schlitzen zu übertragen, bevor die dedizierte PUCCH-Ressource konfiguriert wird.

6. Verfahren nach Anspruch 5, wobei PUCCH-Übertragungen in den N Schlitzen dieselbe Anzahl aufeinanderfolgender Symbole aufweisen und die Anzahl aufeinanderfolgender Symbole durch eine Anzahl von Symbolen bestimmt wird, die einem gemeinsamen PUCCH-Ressourcensatzindexwert entspricht, der von einer Netzwerkvorrichtung angezeigt wird; und/oder
PUCCH-Übertragungen in den N Schlitzen dasselbe Startsymbol aufweisen und das Startsymbol durch einen Startsymbolindex bestimmt wird, der einem gemeinsamen PUCCH-Ressourcensatzindexwert entspricht, der von einer Netzwerkvorrichtung angezeigt wird.

7. Verfahren nach Anspruch 1 oder 4, wobei der Frequenzsprung innerhalb jedes Schlitzes umfasst:
ein Schlitz umfasst eine Vielzahl von Frequenzsprungeinheiten, wobei unterschiedliche Frequenzsprungeinheiten in demselben Schlitz unterschiedlichen Frequenzdomänenressourcen entsprechen, ein PUCCH in eine Vielzahl von Teilen unterteilt ist und jeder Teil der Vielzahl von Teilen unter Verwendung einer Frequenzsprungeinheit in dem Schlitz übertragen wird.

8. Übertragungsverfahren, umfassend:

Senden (S310) von ersten Anzeigeinformationen durch eine Netzwerkvorrichtung, wobei die ersten Anzeigeinformationen verwendet werden, um eine Anzahl von Wiederholungen für die Übertragung eines physikalischen Uplink-Steuerkanals, PUCCH, bevor eine dedizierte PUCCH-Ressource konfiguriert wird, anzuzeigen; und

Senden von zweiten Anzeigeinformationen durch die Netzwerkvorrichtung, wobei die zweiten Anzeigeinformationen verwendet werden, um einen Frequenzsprungmodus für das Übertragen eines PUCCH mit Wiederholungen durch eine Endgerätevorrichtung anzuzeigen;

wobei der Frequenzsprungmodus für das Übertragen des PUCCH mit Wiederholungen durch die Endgerätevorrichtung mindestens eines umfasst von: Frequenzsprung innerhalb jedes Schlitzes; oder Frequenzsprung über Schlitze hinweg; wobei in Reaktion darauf, dass die Endgerätevorrichtung den Frequenzsprung innerhalb jedes Schlitzes während einer PUCCH-Übertragung mit Wiederholungen durchführt, Frequenzsprungmuster zwischen einem ersten physikalischen Ressourcenblock, PRB, und einem zweiten PRB der Endgerätevorrichtung in jedem von N Schlitzen dieselben sind; und Indizes des ersten PRB und des zweiten PRB gemäß einem Index eines PRB bestimmt werden, der einer gemeinsamen PUCCH-Ressource entspricht.

9. Verfahren nach Anspruch 8, wobei die ersten Anzeigeinformationen durch eine Systeminformation übermittelt werden; oder
die ersten Anzeigeinformationen durch Downlink-Steuerinformationen, DCI, übermittelt werden.

10. Verfahren nach Anspruch 8, wobei der Frequenzsprung innerhalb jedes Schlitzes umfasst:
ein Schlitz umfasst eine Vielzahl von Frequenzsprungeinheiten, wobei unterschiedliche Frequenzsprungeinheiten in demselben Schlitz unterschiedlichen Frequenzdomänenressourcen entsprechen, ein PUCCH in eine Vielzahl von Teilen unterteilt ist und jeder Teil der Vielzahl von Teilen unter Verwendung einer Frequenzsprungeinheit in dem Schlitz übertragen wird.

11. Endgerätevorrichtung (1000), umfassend: einen Prozessor (1010) und einen Speicher (1020), wobei der Speicher (1020) dazu konfiguriert ist, ein Computerprogramm zu speichern, der Prozessor (1010) dazu konfiguriert ist, das im Speicher (1020) gespeicherte Computerprogramm aufzurufen und auszuführen, wodurch die Endgerätevorrichtung (1000) dazu gebracht wird, das Verfahren nach einem der Ansprüche 1 bis 7 durchzuführen.

12. Netzwerkvorrichtung (1000), umfassend: einen Prozessor (1010) und einen Speicher (1020), wobei der Speicher (1020) dazu konfiguriert ist, ein Computerprogramm zu speichern, der Prozessor (1010) dazu konfiguriert ist, das im Speicher (1020) gespeicherte Computerprogramm aufzurufen und auszuführen, wodurch die Netzwerkvorrichtung (1000) dazu gebracht wird, das Verfahren nach einem der Ansprüche 8 bis 10 durchzuführen.

## Revendications

1. Procédé de transmission, comprenant :

   l'acquisition (S210), par un dispositif terminal, d'un nombre de répétitions pour une transmission de canal de commande de liaison montante physique, PUCCH, avant qu'une ressource PUCCH dédiée ne soit configurée ; et la réception, par le dispositif terminal, de secondes informations d'indication, dans lequel les secondes informations d'indication sont utilisées pour indiquer un mode de saut de fréquence de transmission d'un PUCCH avec répétitions par le dispositif terminal ;
   dans lequel le mode de saut de fréquence de transmission du PUCCH avec répétitions par le dispositif terminal comprend au moins un parmi : un saut de fréquence au sein de chaque intervalle de temps ; ou un saut de fréquence entre intervalles de temps ; dans lequel, en réponse au fait que le dispositif terminal effectue le saut de fréquence au sein de chaque intervalle de temps lors d'une transmission PUCCH avec répétitions, les modèles de saut de fréquence entre un premier bloc de ressources physiques, PRB, et un second PRB du dispositif terminal dans chacun de N intervalles de temps sont identiques ; et les indices du premier PRB et du second PRB sont déterminés en fonction d'un indice d'un PRB correspondant à une ressource PUCCH commune.

2. Procédé selon la revendication 1, dans lequel le procédé comprend en outre :
la réception, par le dispositif terminal, de premières informations d'indication, dans lequel les premières informations d'indication sont utilisées pour indiquer le nombre de répétitions pour la transmission PUCCH.

3. Procédé selon la revendication 2, dans lequel les premières informations d'indication sont véhiculées par des informations système ; ou
les premières informations d'indication sont véhiculées par des informations de commande de liaison descendante, DCI.

4. Procédé selon l'une quelconque des revendications 1 à 3, dans lequel le procédé comprend en outre :
dans le cas où le dispositif terminal doit effectuer une transmission PUCCH avec répétitions avant que la ressource PUCCH dédiée ne soit configurée, la transmission, par le dispositif terminal, en fonction du nombre de répétitions pour la transmission PUCCH, d'un PUCCH avec répétitions avant que la ressource PUCCH dédiée ne soit configurée.

5. Procédé selon la revendication 1, dans lequel, en réponse au fait que le dispositif terminal acquiert que le nombre de répétitions pour la transmission PUCCH avant que la ressource PUCCH dédiée ne soit configurée est N, le dispositif terminal est invité à transmettre un PUCCH avec répétitions sur N intervalles de temps, avant que la ressource PUCCH dédiée ne soit configurée.

6. Procédé selon la revendication 5, dans lequel les transmissions PUCCH sur les N intervalles de temps présentent le même nombre de symboles consécutifs, et le nombre de symboles consécutifs est déterminé par un nombre de symboles correspondant à une valeur d'indice d'ensemble de ressources PUCCH commune indiquée par un dispositif réseau ; et/ou
les transmissions PUCCH sur les N intervalles de temps présentent le même symbole de départ, et le symbole de départ est déterminé par un indice de symbole de départ correspondant à une valeur d'indice d'ensemble de ressources PUCCH commune indiquée par un dispositif réseau.

7. Procédé selon la revendication 1 ou 4, dans lequel le saut de fréquence au sein de chaque intervalle de temps comprend :
un intervalle de temps comprend une pluralité d'unités de saut de fréquence, dans lequel différentes unités de saut de fréquence dans un même intervalle de temps correspondent à différentes ressources de domaine de fréquence, un PUCCH est divisé en une pluralité de parties, et chaque partie de la pluralité de parties est transmise en utilisant une unité de saut de fréquence dans l'intervalle de temps.

8. Procédé de transmission, comprenant :

l'envoi (S310), par un dispositif réseau, de premières informations d'indication, dans lequel les premières informations d'indication sont utilisées pour indiquer un nombre de répétitions pour une transmission de canal de commande de liaison montante physique, PUCCH, avant qu'une ressource PUCCH dédiée ne soit configurée ; et l'envoi, par le dispositif réseau, de secondes informations d'indication, dans lequel les secondes informations d'indication sont utilisées pour indiquer un mode de saut de fréquence de transmission d'un PUCCH avec répétitions par un dispositif terminal ;
dans lequel le mode de saut de fréquence de transmission du PUCCH avec répétitions par le dispositif terminal comprend au moins un parmi : un saut de fréquence au sein de chaque intervalle de temps ; ou un saut de fréquence entre intervalles de temps ; dans lequel, en réponse au fait que le dispositif terminal effectue le saut de fréquence au sein de chaque intervalle de temps lors d'une transmission PUCCH avec répétitions, les modèles de saut de fréquence entre un premier bloc de ressources physiques, PRB, et un second PRB du dispositif terminal dans chacun de N intervalles de temps sont identiques ; et les indices du premier PRB et du second PRB sont déterminés en fonction d'un indice d'un PRB correspondant à une ressource PUCCH commune.

9. Procédé selon la revendication 8, dans lequel les premières informations d'indication sont véhiculées par des informations système ; ou
les premières informations d'indication sont véhiculées par des informations de commande de liaison descendante, DCI.

10. Procédé selon la revendication 8, dans lequel le saut de fréquence au sein de chaque intervalle de temps comprend :
un intervalle de temps comprend une pluralité d'unités de saut de fréquence, dans lequel différentes unités de saut de fréquence dans un même intervalle de temps correspondent à différentes ressources de domaine de fréquence, un PUCCH est divisé en une pluralité de parties, et chaque partie de la pluralité de parties est transmise en utilisant une unité de saut de fréquence dans l'intervalle de temps.

11. Dispositif terminal (1000), comprenant : un processeur (1010) et une mémoire (1020), dans lequel la mémoire (1020) est configurée pour stocker un programme informatique, le processeur (1010) est configuré pour appeler et exécuter le programme informatique stocké dans la mémoire (1020), et amène le dispositif terminal (1000) à exécuter le procédé selon l'une quelconque des revendications 1 à 7.

12. Dispositif réseau (1000), comprenant : un processeur (1010) et une mémoire (1020), dans lequel la mémoire (1020) est configurée pour stocker un programme informatique, le processeur (1010) est configuré pour appeler et exécuter le programme informatique stocké dans la mémoire (1020), et amène le dispositif réseau (1000) à exécuter le procédé selon l'une quelconque des revendications 8 à 10.

FIG. 1

A terminal device acquires a number of repetitions for a PUCCH transmission before a dedicated PUCCH resource is configured — S210

FIG. 2

The network sends first indication information, where the first indication information is used to indicate a number of repetitions for a PUCCH transmission before the dedicated PUCCH resource is configured — S310

FIG. 3

Terminal device 400

Processing unit 410

FIG. 4

Terminal device 500

Processing unit 410

First receiving unit 510

Second receiving unit 530

Transmission unit 520

FIG. 5

Network device 600

First sending unit 610

FIG. 6

Network device 700

First sending unit 610

Second sending unit 710

FIG. 7

Starting PRB indexes of different frequency hopping units

RB2

RB1

| Second frequency hopping unit | Second frequency hopping unit | Second frequency hopping unit |

First frequency hopping unit

First frequency hopping unit

...

First frequency hopping unit

Slot 0

Slot 1

Slot 7

FIG. 8

Starting PRB
indexes of
different
frequency
hopping units

RB2

RB1

| Second frequency hopping unit |

| First frequency hopping unit |

| Second frequency hopping unit |

...

$\underbrace{\hspace{3cm}}$
Slot 0

$\underbrace{\hspace{3cm}}$
Slot 1

$\underbrace{\hspace{3cm}}$
Slot 7

FIG. 9

EP 4 498 623 B1

Communication device 1000

Memory 1020

Processor 1010

Transceiver 1030

FIG. 10

Chip 1100

Input interface 1130

Processor 1110

Memory 1120

Output interface 1140

FIG. 11

Communication system 1200

Terminal device

1210

Network device

1220

FIG. 12

REFERENCES CITED IN THE DESCRIPTION

**Patent documents cited in the description**

- US 20210100004 A1